# EUROPEAN PATENT APPLICATION

(11) **EP 4 546 041 A1**
(43) Date of publication of application: **30.04.2025**
(21) Application number: 23205397.5
(22) Date of filing: 24.10.2023
(51) Int. Cl.: G02F 1/167, G02F 1/1676

(54) **LIGHT MODULATOR HAVING A VIBRATION SOURCE**

(71) Applicant: eLstar Dynamics Patents B.V., 3235 CD Rockanje (NL)
(72) Inventor: MITIOGLU, Anatolie, 5651 GW Eindhoven (NL); THOMAS, David Richard, 06650 Opio (FR); MASSARD, Romaric Mathieu, 5651 GW Eindhoven (NL)
(74) Representative: DeltaPatents B.V.

(57) **Abstract**

Some embodiments are directed to a light modulator. The light modulator includes an optical layer extending between a first and a second substrate. Particles in a fluid in the optical layer may be modulated thus changing the optical properties of the light modulator. The light modulator includes a vibration source configured to deliver a mechanical wave to at least part of the first and/or second substrate.

## Description

### TECHNICAL FIELD

The presently disclosed subject matter relates to a light modulator, a light modulator method, a computer storage medium.

### BACKGROUND

A known light modulator is disclosed in WO2022023180, included herein by reference. The known light modulator comprises transparent or reflective substrates. Multiple electrodes are applied to the substrates in a pattern across the substrate. A controller may apply an electric potential to the electrodes to obtain an electro-magnetic field between the electrodes providing electrophoretic movement of the particles towards or from an electrode.

### SUMMARY

It would be advantageous to have an improved light modulator, and an improved substrate that may be used therein.

Some embodiments are directed to a light modulator. The light modulator includes an optical layer extending between a first and a second substrate. Particles in a fluid in the optical layer may be modulated thus changing the optical properties of the light modulator. The light modulator includes a vibration source configured to deliver a mechanical wave to at least part of the first and/or second substrate.

For example, the vibration source may be configured to deliver a shear wave to at least part of the first and/or second substrate, and/or a pressure wave, e.g., an acoustic wave, to the fluid.

For example, such vibration may be advantageous to clean the light modulator, e.g., remove or facilitate removing of contaminants, such as moisture. For example, such vibration may be advantageous to accelerate the dispersion of particles in the optical layer, and thus accelerate transition of the light modulator between optical states, e.g., from more transparent to less transparent.

In an embodiment, one or more spacers are arranged between the first substrate and the second substrate maintaining a cell gap between the first substrate and the second substrate. The one or more spacers comprising the vibration source arranged to create a cell gap vibration.

An aspect is a light modulator method for a light modulator, a method of manufacturing a substrate as in an embodiment. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium. Another aspect of the presently disclosed subject matter is a method of making the computer program available for downloading.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a building block,
Figure 1b schematically shows an example of an embodiment of a substrate,
Figure 1c schematically shows an example of an embodiment of a substrate,
Figure 1d schematically shows an example of an embodiment of a substrate,
Figure 1e schematically shows an example of an embodiment of a substrate,
Figure 1f schematically shows an example of an embodiment of a substrate,
Figure 1g schematically shows an example of an embodiment of a light modulator,
Figures 2a-2f schematically show an example of an embodiment of a substrate,
Figure 3a schematically shows an example of an embodiment of a light modulator,
Figure 3b schematically shows an example of an embodiment of a light modulator,
Figure 3c schematically shows an example of an embodiment of a car,
Figures 4a-4c schematically show an embodiment of a light modulator,
Figure 5a schematically shows an example of an embodiment of a substrate for use in an embodiment of a light modulator,
Figure 5b schematically shows an example of an embodiment of a substrate for use in an embodiment of a light modulator,
Figure 5c schematically shows a side-view of an example of an embodiment of a light modulator,
Figure 5d schematically shows a side-view of an example of an embodiment of a light modulator,
Figure 6a schematically shows a side-view of an example of an embodiment of a light modulator,
Figure 6b schematically shows a side-view of an example of an embodiment of a light modulator,
Figure 6c schematically shows a side-view of an example of an embodiment of a light modulator,
Figure 6d schematically shows a side-view of an example of an embodiment of a light modulator,
Figure 6e schematically shows an example of an embodiment of a substrate for use in an embodiment of a light modulator,
Figure 6f schematically shows an example of an embodiment of a substrate for use in an embodiment of a light modulator,
Figure 6g schematically shows an example of an embodiment of a substrate for use in an embodiment of a light modulator,
Figure 6h schematically shows a side-view of an example of an embodiment of a light modulator,
Figure 7 schematically shows an example of an embodiment of a light modulator,
Figure 8a schematically shows an example of a controlling method for a light modulator method,
Figure 8b schematically shows an example of a controlling method for a light modulator method,
Figure 9a schematically shows a computer readable medium having a writable part comprising a computer program according to an embodiment,
Figure 9b schematically shows a representation of a processor system according to an embodiment.

### Reference signs list

The following list of references and abbreviations is used in some of the figures and is provided for facilitating the interpretation of the drawings and shall not be construed as limiting the claims.
- 10: a light modulator
- 11: a first substrate
- 12: a second substrate
- 13, 13a, 13b: electrodes
- 14, 14a, 14b: electrodes
- 15: a fluid
- 16: a controller
- 30: particles
- 20: a car
- 21: a light modulator
- 40: a light modulator
- 41: a first substrate
- 42: a second substrate
- 43: a third substrate
- 46: a controller

- 100-102: a substrate
- 111-114: a main line
- 121-124: a main line
- 131-134: interdigitated electrodes
- 140: a building block
- 141-144: a building block
- 110, 120: a driving bus
- 110', 120': a driving bus
- 119, 129: a connecting zone
- 191, 192: a direction
- 603-604: a substrate
- 611-622: a building block
- 651-662: a building block
- 151: a spacer

- 500: a substrate for a light modulator
- 510, 520: a driving bus
- 511, 521: a main line
- 531, 532: a vibration source
- 533: a vibration source
- 501, 502: a substrate
- 534, 535: a vibration source
- 541: particles
- 540: an optical layer
- 542, 543: a vibration source
- 571, 572: an actuator
- 575, 578: a diaphragm
- 573, 574, 577: a clamp
- 576: a connection
- 504: a piezoelectric layer
- 503: a dielectric layer
- 544-547: an electrode
- 145: a building block
- 536: a vibration source
- 146: a building block
- 512: a main line
- 537: a vibration source
- 551: a connecting element
- 561, 562: a vibration source
- 538: vibration signal line
- 563: a spacer
- 600: a substrate
- 631: a droplet
- 610: a droplet detector

- 1000, 1001: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

Embodiments of light modulators are described herein that comprise a vibration source configured to deliver a mechanical wave to at least part of a substrate in the light modulators. The vibration source may also, or instead, impart a mechanical wave to the fluid in the optical layer.

Such a vibration source is useful to improve dispersion of particles in the light modulator. Accordingly, the light modulator transitions quicker to an opaque state and/or reaches a uniform opacity quicker. Such a vibration source is also useful for cleaning the light modulator. Part or all of the dirt, grime and/or moisture that attaches to a substrate in the light modulator dislodges through application of a mechanical wave to the substrate. As a result, the light modulator needs less manual cleaning.

A light modulator comprises a first substrate, a second substrate arranged opposite the first substrate, an electrode system extending across at least the first substrate on a side facing the second substrate. Extending between the first and second substrate is an optical layer that comprises a fluid that comprises particles. By applying an electric potential to the electrode system an electric field in the optical layer is modulated which in turn causes movement of the particles in the optical layer. As a result of a new distribution of the particles in the optical layer, light that passes through the substrates is modulated-typically visibly so. An electrode system extending across a substrate may comprise one or more electrodes extending across the substrate. An electrode system may be applied to one of the first and second substrates, or to both of the first and second substrates. Typically, the electrode systems are applied to a side of a substrate facing the optical layer, and may be in fluidic contact, though neither is necessary.

Many embodiments of light modulators are possible. For example, the particles may be moved through electrophoretic and/or through dielectrophoretic forces. For example, various types of optical layers, and electrode system are possible. Some types of optical layers use an electrode system with two electrodes, one on each side, some use three electrodes, with 2 on one side and 1 on the other. Some optical layers and electrode system use 4 or even more electrodes. We will refer to embodiments as a two-electrode, three-electrode, or four-electrode to refer to the type of optical layer.

Furthermore, the vibration sources may be of various types, and variously arranged. For example, the vibration sources may be applied on a surface of a substrate facing towards the optical layer or on a surface of a substrate facing away from the optical layer. The side of a surface of a substrate facing towards the optical layer is also referred to as the optical layer-side. Having electrodes on the optical layer-side is advantageous as it increases the effect of the electrode system in the optical layer, but this placement is not necessary, e.g., an electrode system could be placed on the opposite side.

The vibration sources may comprise one or more of: a variety of vibrating technologies, e.g., piezoelectric actuators, electrostatic actuators, thin-film ultrasonic transducers, and others. Vibration sources may also or instead comprise one or more of: electromagnetic actuators, electrostatic actuators, mechanical exciters. The latter group may be applied advantageously at an away facing surface of a substrate.

Substrates are disclosed, e.g., for use in a light modulator, in particular, dynamic glazing. The substrate is transparent, and at least one electrode is applied to a side of the substrate, the electrode extending in a pattern across the side of the first substrate. At least one of the first and second substrates is transparent. In a glazing application both substrates are transparent. In other applications, e.g., a display, one of the two substrates may be opaque.

Dynamic glazing, also known as smart glazing, may comprise a system wherein the transparency or optical properties of a glazing material are altered in response to an external electrical input. This system may allow for active control over light and heat transmission, thereby enhancing energy efficiency and user comfort in various architectural or vehicular applications.

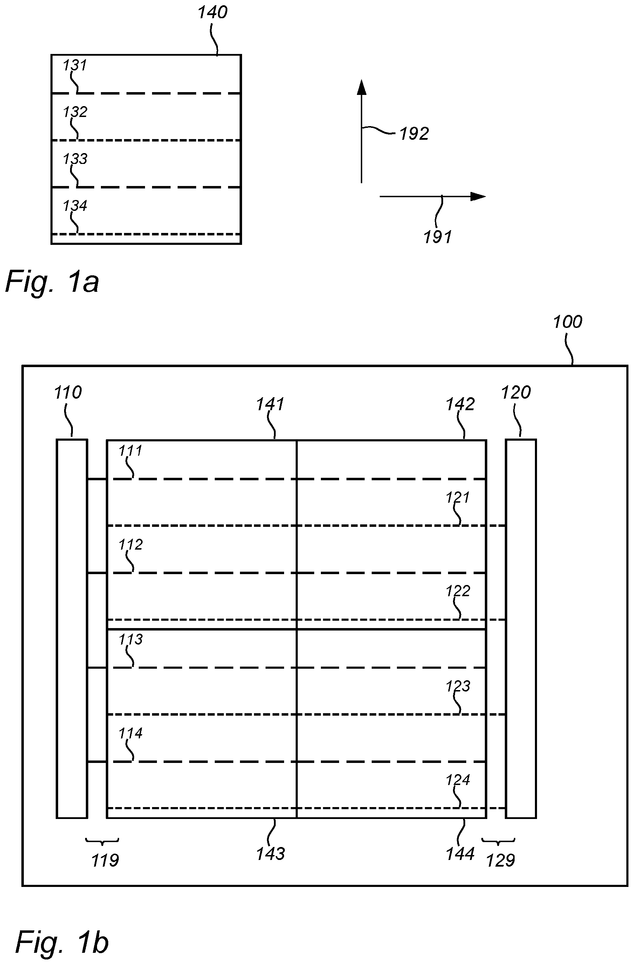

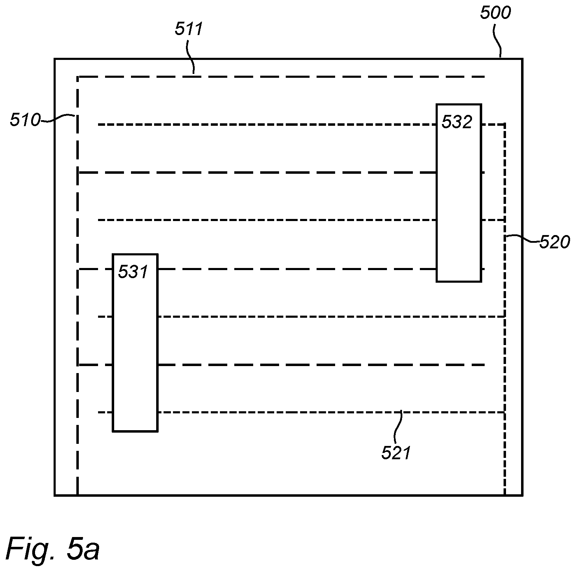

Figures 1a- 4c provide various examples of the electrode system on the first and second substrate and how they may be implemented or used in a light modulator. Figure 5a and following focus on the vibration source, and/or how the electrode system may interact with it.

Some of the known light modulators which may be provided with a vibration source are based on the electrophoretic principle. For example, the substrate may comprise multiple interdigitated electrodes applied to the substrate, e.g., two electrodes, each of the multiple electrodes being arranged in a pattern across the substrate, the multiple interdigitated electrodes being arranged alternatingly with respect to each other on the substrate. Having multiple interdigitated electrodes allows local control over the electric field enabling electrophoretic control of particles.

Electrophoretic light modulators are explained more extensively herein and are used as the motivating example. In an embodiment, a light modulator comprises a first substrate and a second substrate. At least one of the first and second substrate may be according to an embodiment, having a perforated electrode. For example, the first and second substrates may be arranged with inner sides opposite to each other. Using a substrate according to an embodiment has, e.g., the effect of reducing optical interference. An optical layer is arranged between the first and second substrates. The electrode is arranged to modulate an electrical field in the optical layer. The optical layer comprises a fluid comprising particles, wherein the particles are electrically charged or chargeable. The particles may be moved under control of the electrical field. For example, a controller may be configured to apply an electric potential to the electrode to obtain an electro-magnetic field at the electrode providing electrophoretic movement of the particles towards or from one of the at least one electrode causing modulation of the optical properties of the light modulator.

Below a number of known light modulators are reviewed, showing some of the options in technology and electrodes. These known substrates can advantageously be modified by perforating the electrodes, reducing electrode resistance and opacity. These examples also show light modulators with varying numbers of electrodes on a substrate.

International patent applications WO2011012499 A1 (included herein by reference) and WO2011131689 (included herein by reference) disclose light modulators in the form of electrophoretic display devices, e.g., e-Ink displays. A pixel of the display comprises an accumulation electrode and a field electrode, the accumulation electrode being arranged at a storage area for accumulating charged particles away from an aperture area, and the field electrode occupying a field-electrode area being at least a part of an aperture area of the pixel, the charged particles being movable between the accumulation electrode and the field electrode. In an embodiment, two electrodes are applied on a single substrate. Accumulation electrode and/or field electrode may be perforated.

US patent 10921678 with title 'Electrophoretic device', included herein by reference shows an electrophoretic device having only one patterned electrode on one of two substrates. For example, the one substrate with an electrode according to US 10921678 may be replaced with a substrate according to an embodiment comprising one single electrode. For example, an embodiment comprises a first transparent substrate with a field electrode, and a second substrate opposite of the first substrate, with an accumulation electrode. The first substrate and the second substrate enclose a pixel with a fluid and particles. In use an applied electro-magnetic field to the field electrode and the accumulation electrode provides movement of the particles from the field electrode and the accumulation electrode and vice versa. Any of these cited electrophoretic or dielectrophoretic light modulators may be adapted by including one or more vibration sources according to an embodiment.

US patent 8054535B2 (included herein by reference) and US patent 8384659b2 (included herein by reference) show alternative example of electrophoretic light modulators in one of two substrates have two patterned electrodes.

Patterned electrodes are also used in dielectrophoretic light modulators. For example, US patent application US2005185104A1 (included herein by reference) and US20180239211A1 (included herein by reference) show a dielectrophoretic light modulators having a substrate with a patterned electrode. Any of these cited electrophoretic or dielectrophoretic light modulators may be adapted by including one or more vibration sources according to an embodiment.

The paper "Reversible Metal Electrodeposition Devices: An Emerging Approach to Effective Light Modulation and Thermal Management", included by reference, also shows a substrate on which a patterned electrode is applied. A vibration source according to an embodiment may be included herein.

An embodiment of a substrate may be used in an electrochromic device (ECD). An electrochromic device (ECD) controls optical properties such as optical transmission, absorption, reflectance and/or emittance in a continual but reversible manner on application of voltage (electrochromism). This property enables an electrochromic device to be used for applications like smart glass, electrochromic mirrors, and electrochromic display devices. A vibration source according to an embodiment may be included herein.

An electrochromic device is described, e.g., in the paper "Silver grid electrodes for faster switching ITO free electrochromic devices" by António Califórnia et al., included herein by reference. The paper describes the preparation of an electrochromic device, in this case one which is ITO free. A vibration source according to an embodiment may be included herein.

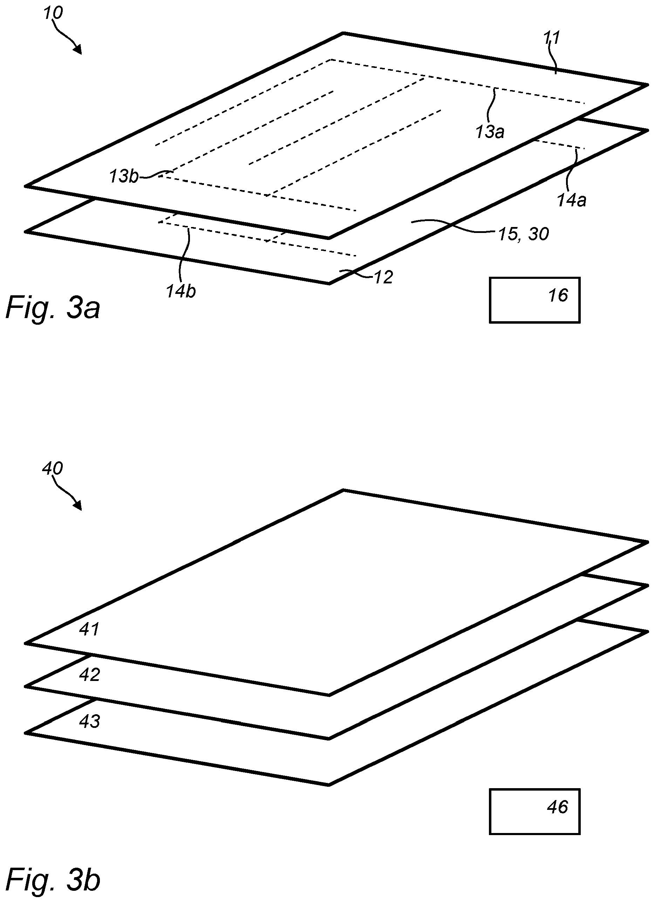

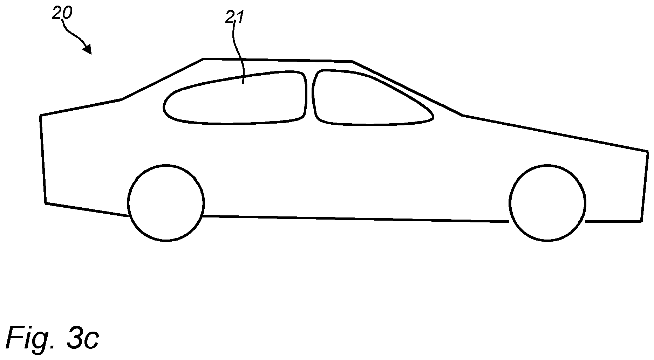

An electrochromic device uses electrically conductive electrodes applied on a substrate. The cited paper uses silver grids, made using silver ink, as electrically conductive electrodes. An electrochromic device may comprise an electrochromic material. The cited paper uses poly(3,4-ethylenedioxythiophene) polystyrene sulfonate (PEDOT:PSS). In an electrochromic device, at least one electrode, e.g., the electrically conductive electrode, is applied to a substrate. The electrode being arranged in a pattern across the substrate. The cited paper discloses two different grid patterns a regular hive and a regular ladder design. See table 1 and figure 3 of the cited paper. A vibration source according to an embodiment may be included herein.

Electrodes may be applied to a substrate by screen-printing on a substrate, in the case of the cited paper, polyethylene terephthalate (PET). The electrodes are typically an electrically conductive material, e.g., a metal or metal oxide. In the cited paper, silver ink was used to screen print the grids on PET using a RokuPrint RP 2.2 equipment and a 180 wired mesh. The samples were allowed to dry in an oven at 130 °C during 15 min. On top of these silver grids, one or two layers of PEDOT:PSS SV3 were posteriorly printed by screen printing. A vibration source according to an embodiment may be included herein.

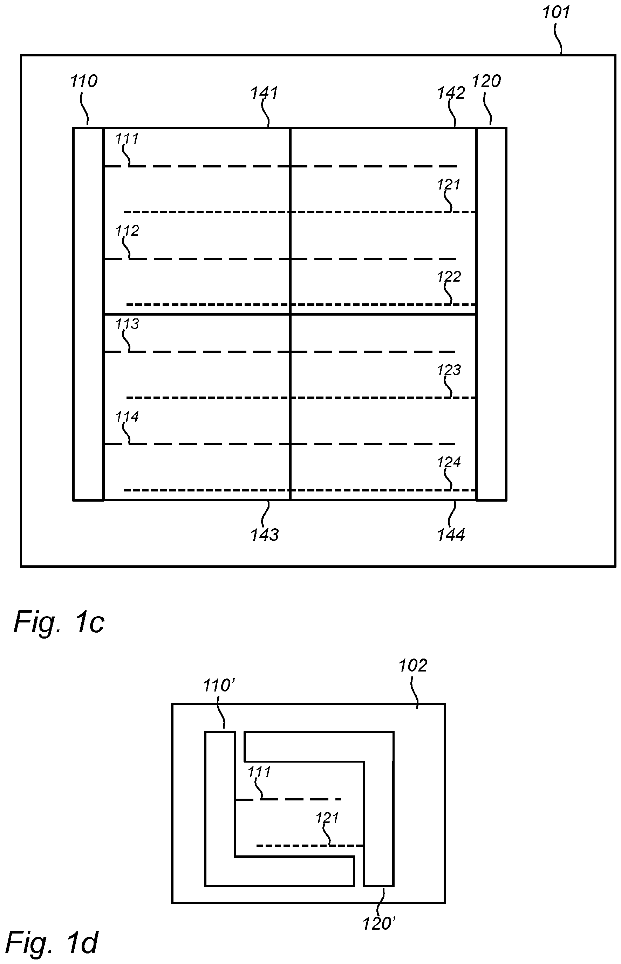

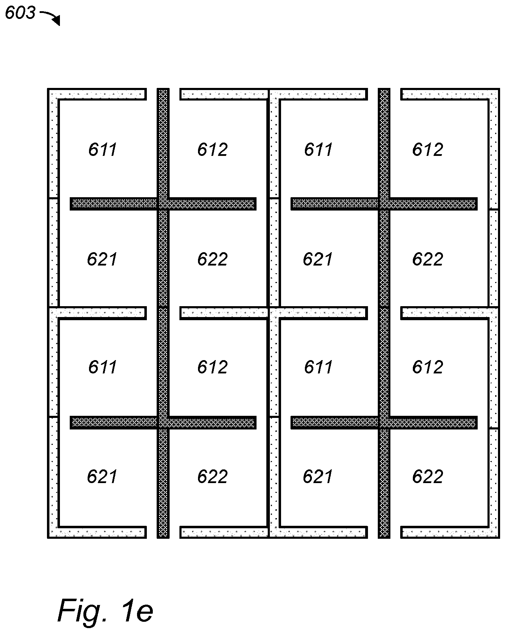

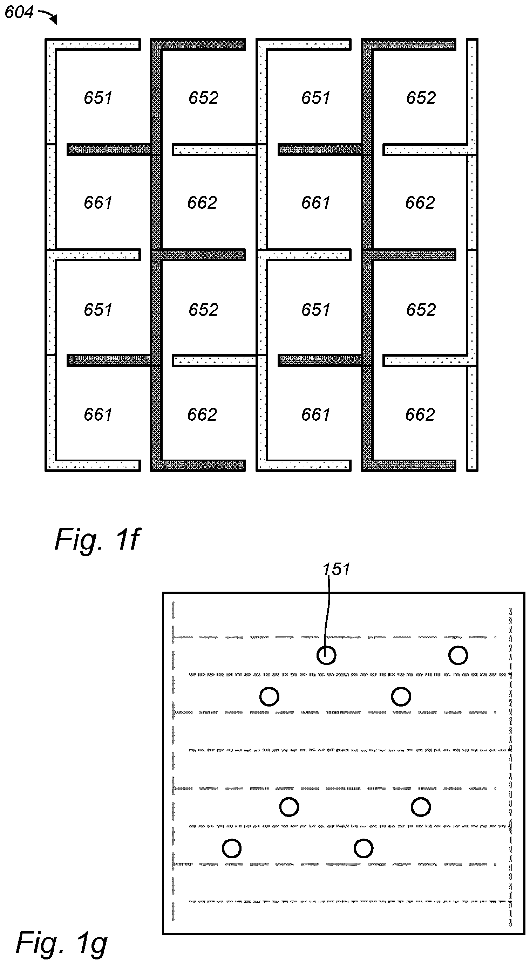

Another example of an electrochromic device is given in US patent 5161048, with title "Electrochromic window with metal grid counter electrode and acidic polyelectrolyte", included herein by reference. For example, an electrochromic device may comprise a transparent electrochromic film and an ion-conductive layer disposed between a pair of electrodes. The metal grid electrode is issued for the electrodes. Figure 1 of the patent shows a metal grid according to the cited patent. To form the counter electrode, a metal grid is disposed adjacent to the second glass substrate.

For example, in an embodiment of an electrochromic device, the electrochromic device may comprise a transparent substrate, an electroconductive electrode member, a transparent electrochromic film in contact with said electroconductive electrode member, an ion-conductive polymer in contact with said electrochromic film; and a patterned conductive electrode in contact with said ion-conductive polymer. A vibration source according to an embodiment may be included.

A substrate according to an embodiment can be beneficially applied in a number of other technologies. For example, the light modulator may be dielectrophoretic light modulator, e.g., as shown in US20050185104 A1, included herein by reference. A vibration source according to an embodiment may be included herein.

A substrate as in an embodiment may also be used in other electrowetting and OLED applications. In OLED and electrowetting one needs electrodes on only one of the substrates. The substrate with electrodes may be according to an embodiment including a vibration source.

Yet other dynamic glass technologies may be used.

For example, an optical layer for a light modulator, e.g., in dynamic glazing, may use LCD (Liquid Crystal Display) technology. For example, the optical layer may comprise liquid crystal molecules that can be aligned to control the amount of light passing through the display. When an electric current is applied to the liquid crystal molecules, they change their alignment and modify the way that light passes through the material. The optical layer with LCD material may be placed between two layers of glass or plastic and connected to an electrical circuit. By controlling the electric current applied to the LCD material, the amount of light passing through the glazing may be adjusted. A vibration source according to an embodiment may be included herein.

An optical layer for a light modulator, e.g., in dynamic glazing, may use Suspended Particle Device (SPD) technology. The optical layer may comprise particles suspended within a thin film or laminate. By applying an electrical current to the SPD film, the particles align and modify the amount of light passing through the material, allowing for dynamic control of the glazing. When the electrical current is turned off, the suspended particles randomize and allow more light to pass through, creating a clear or transparent effect. When the electrical current is turned on, the particles align and absorb more light, creating a darker or tinted effect. A vibration source according to an embodiment may be included herein.

In an application of the light modulator for glazing both substrates are typically transparent. In other application, e.g., in television, e-readers, etc., only one substrate may be transparent.

**Figure 1b** schematically shows an example of an embodiment of a substrate. The substrate is in particular useful for use in a light modulator, e.g., of a kind described herein. Across the substrate an electrode system is applied in the form of multiple interdigitated electrodes. Shown in figure 1b are two interdigitated electrodes. The substrate also comprises at least one vibration source configured to deliver a mechanical wave to at least part of the substrate; these are not shown in figure 1b, but in other figures herein, in particular figure 5a and following.

The motivating example use of the substrate is in an electrophoretic light modulator. Typically, an electrophoretic light modulator comprising at least two substrates, each having at least two electrodes at each of the substrates; this is not necessary though, for example, an electrophoretic light modulator may comprise a single substrate with 2 electrodes and an opposite substrate with 1 electrode. In any case, preferably, at least one of the substrates in the light modulator is according to an embodiment.

An embodiment of a light modulator comprises a first substrate according to an embodiment and a second substrate. The first and second substrates are arranged with inner sides opposite to each other. At least one electrode is applied to the inner side of the first substrate. An optical layer is arranged between the first and second substrates. A controller is configured to apply an electric potential to the at least one electrode causing modulation of the optical properties of the light modulator. One or both of the first and second substrates are transparent and/or translucent.

There are many different kinds of light modulators that use at least one electrode applied to a substrate. The optical layer and controller may be arranged to modulate optical properties using effects that depend on the potential on the electrode; examples including the dielectrophoretic effect and the electrophoretic effect. For example, optical modulation may comprise the modulation of particles arranged in the optical layer. The number of electrodes may range from one on a single substrate, to multiple electrodes on one or both substrates.

The optical layer arranged between the first and second substrates may comprise particles, e.g., suspended in a fluid. The controller may be configured to apply an electric potential to the electrodes causing the particles to move thus modulating the optical properties of the light modulator.

In an embodiment, the particles comprise electrically charged or chargeable particles, and the controller is configured to apply an electric potential to the electrode to obtain an electro-magnetic field providing electrophoretic movement of the particles. In an embodiment, the electro-magnetic field is arranged between at least two electrodes arranged on the same substrate or arranged on different substrates.

In an embodiment, the particles comprise dielectric particles, and the controller is configured to apply an electric potential to the electrode to apply an electric field gradient to the particles enabling the particles to be moved under the action of dielectrophoretic forces.

The controller may apply an electric signal to one or more of the electrodes. Embodiments that control dielectrophoretic forces may use a signal that comprises a DC signal and/or an AC signal. Embodiments that control electrophoretic forces may use a signal that comprises a DC signal and/or an AC signal.

Shown in figure 1b are two electrodes on the same surface. The two electrodes are indicated in figure 1b in two different dashing styles. There could be more than two electrodes on the same side of the substrate, e.g., to facilitate more fine-grained control of voltage differences across the substrate. The electrodes are applied to a same side of the substrate. Applying electrodes to a substrate may be done lithographically, e.g., using a mask representing the electrodes pattern. Electrodes may also be applied by embedding them in the substrate.

An electrode is electrically connected, e.g., has the same electric potential everywhere. An electrode may comprise a driving bus and main lines. At least, the main lines are interdigitated with main lines of a further electrode. Typically, the electrodes extend in a substantially straight line across the substrate, while the main lines are convoluted.

In an embodiment, the two substrates of a light modulator each have two electrodes arranged at its inner surface. Though, as mentioned, multiple electrodes on one or both substrates are not needed. For example, an embodiment of a light modulator comprises a first substrate and a second substrate. For example, the first substrate may comprise one electrode, the second substrate may not comprise electrodes. For example, the first substrate may comprise two electrodes, the second substrate may comprise one electrode. For example, the first substrate may comprise two electrodes, the second substrate may comprise two electrodes. For example, the first substrate may comprise more than two electrodes, the second substrate may comprise two or more electrodes.

Light modulators, wherein each substrate comprises two electrodes are used as a motivating example, though. Designs of substrates featuring two electrodes may be adapted to have a single electrode, e.g., by connecting the two electrodes, or by removing one of the electrodes. Adapting a substrate in such a manner may make it suitable for use in different technologies.

Each of the multiple electrodes are arranged in a pattern across the substrate. The multiple electrodes are arranged alternatingly with respect to each other on the substrate. Typically, an electrode comprises multiple main lines, that each stretch across the substrate. The main lines of the electrodes alternate, e.g., interdigitate. For example, in figure 1b the first electrode comprises main lines 111-114, and the second electrode comprises main lines 121-124. The electrodes are each driven by its driving bus. Figure 1b shows two driving buses: driving bus 110 and driving bus 120. The electrodes also serve to connect the main lines together. For example, in figure 1b, the driving bus 110 drives and connects main lines 111-114; and the driving bus 120 drives and connects main lines 121-124. There can be more main lines than the four shown in this example. The use of main lines is advantageous as it reduces the length of the electrodes, but it is not necessary. A design using only one main line per electrode is not impossible, though having multiple is advantageous.

The multiple of main lines of the first and second electrode are arranged alternatingly with respect to each other on the substrate.

In this example, there are no other connections between the main lines of an electrode than through the common driving bus. In an embodiment, an electrode comprises a mesh electrode, that is, it may have additional electrical connection may be added between electrode lines of the same electrode. This increases the reliability of the electrode. Such additional connections typically cross an electrode line of another electrode, which may be resolved by placing the additional electrical connection in part on a different level with respect to the substrate than the electrode line being crossed. For example, one may place the entire electrodes at a different level than another electrode. In this way, additional connections may be placed without short circuits arising.

A motivating application for a substrate such as substrate 100 is in smart glazing, e.g., a light modulator, which may be applied in domestic housing, offices, green houses, cars, and the like. The level of transparency or reflectivity of the smart glazing can be adapted electrically. For example, in smart glazing two substrates such as substrate 100 would be stacked so that the sides on which the two electrodes are applied face each other. A fluid with particles is enclosed between the two substrates. Smart-glazing embodiments are further discussed below. In an embodiment, electrodes, e.g., two or more electrodes are applied to one surface of each substrate. There could also be one, two or more electrodes on the other surface of substrate 100, e.g., to facilitate stacking of three or more substrates.

Some embodiments below show examples of modulating a transparency or reflectivity level. Light modulators may be adapted for other optical effects. For example, if desired, embodiments could be modified to different levels of translucency instead of different levels of transparency. If desired, the type of particle that is used in an embodiment can be varied, e.g., to particles that differ in which wavelengths they absorb or reflect, and how specular of diffuse the reflection is. For example, in an embodiment, a light modulator can modulate different levels of reflection. Particles can also emit light. Stacking multiple optical layers further increases the possibilities.

Having two sets of alternating main lines is sufficient to provide electrically adaptable glazing; due to the alternating two sets the electric field at any part of the substrate can be controlled as two opposite electrodes border the part from two opposing sides.

Interestingly, the pattern in which the electrodes stretch across the substrate may be created by multiple repeated building blocks. Shown in figure 1b, the electrodes on substrate 100 shows four blocks: blocks 141, 142, 143 and 144 which are all substantially the same. The number of building blocks may be larger than four. The building blocks repeat in both directions across the substrate, e.g., a first direction 191, e.g., an x-direction, shown horizontally in the figure, and a second direction 192, e.g., a y-direction, shown vertically in the figure. Using building blocks is advantageous as it allows manufacture using a stepper machine; using building blocks is not necessary.

For example, **figure 1a** schematically shows an example of an embodiment of a building block 140. Building block 140 comprises multiple interdigitated electrodes extending in at least 2 directions across the building block. Shown in figure 1a are four electrodes: electrode 131-134. When the building blocks are repeated across a substrate in two directions, the electrodes in the building block will form the electrodes, e.g., form the multiple main lines of the electrodes. Note that the building blocks are typically connected in a substrate-electrode design tool. Typically, a building block comprise more than four electrode lines. For example, in a range of embodiments between 8 and 12 main lines are used. The number of electrode lines can be much higher though. For example, a building block may comprise many short electrode lines near the edges that connect to lines of other building blocks when the block is repeated. Taking such short offshoots into account, the number of lines could go up to, say, 50. Clearly, when using larger building blocks, the number of electrode lines may go up as well. In an embodiment, the number of electrode lines in a building block is between 8 and 50, or between 8 and 25, etc.

The electrodes that are formed by repeating building blocks are connected to the driving buses. Typically, electrode lines in a building block are connected to electrode lines in neighboring blocks by mering corresponding electrode lines; this is not necessary though, between repeated building blocks connection zones can be inserted that connect corresponding electrode lines.

This step can connect up multiple of the main lines together thus forming a single electrode. Figure 1b shows two connecting zones 119 and 129 in which the main lines belonging to the same electrode are connected to driving bus 110 and driving bus 120, respectively.

The electrodes that are shown in figure 1a are alternately dashed in the same dashing style of figure 1b. Indeed, it happens to be the case in this example, that a particular electrode of the building block of figure 1a will always end up in the first electrode or in the second electrode, e.g., as indicated in this case by the dashing style. This is, however, not necessarily the case. An electrode in a building block may end up as part of the first electrode or as part of the second electrode. This can change, e.g., as a result of the parity of the number of electrodes in the building block, the pattern in which the building blocks are repeated, etc.

For example, a particular pattern of repeated building blocks may be used for a light modulator with two electrodes, in which one might assign alternating main lines to the two electrodes. However, the same pattern of repeated building blocks may be used for a light modulator with three electrodes, in which one might assign every next set of three main lines to the three electrodes.

Furthermore, the building block shown in figure 1a is square, but this is also not needed. For example, a building block may be rectangular. In an embodiment, building block shape(s) could form a so-called tessellation. For example, a building block may be a triangle, a hexagon or even a combination of plane-filling shapes.

As said, figures 1a and 1b are schematic. This is especially the case for the depiction of the electrodes. An electrode as shown in figure 1a is straight, however, in an embodiment, an electrode on the building block is more convoluted, e.g., curved. By adapting the shape of the electrodes undesirable diffraction effects can be altered.

In an embodiment, a dimmable mirror comprises a light modulator according to an embodiment. For example, the dimmable mirror comprises a transparent substrate, an optical layer, and a reflective substrate. One or both of the substrates is according to an embodiment. The dimmable mirror may be electrophoretic. Typically, each substrate has two electrodes, but this is not necessary.

**Figure 1c** schematically shows an example of an embodiment of a substrate 101. Substrate 101 is similar to that of substrate 100, except for how the main lines are connected that formed from the electrodes on the building blocks to the driving buses. In figure 1a, a connection zone is inserted between the repeated building blocks and the driving buses 110 and 120. In the connection zone, the main lines belonging to the same electrode are connected to the same driving bus. In figure 1c, the driving bus are directly adjacent to the building blocks. To avoid that a driving bus would connect to a main line of a different electrode, some of the building blocks are modified.

For example, building block 141 may be a copy of building block 140, but the electrode 134 is shortened so that the main line 122 of which line 134 is a part does not connect to bus 110. In figure 1c the building blocks are substantially the same except that a disconnect is introduced in some electrodes of building blocks next to the driving bus to avoid connecting a main line with the driving bus. Although all building blocks shown in figure 1c are modified in this way, in an embodiment the majority of building blocks would not be modified, e.g., the building blocks that are not adjacent to driving buses 110, 120.

**Figure 1d** schematically shows an example of an embodiment of a substrate 102. In an embodiment, the electrodes in a building block each connect the same opposite sides of the building block. This has the consequence that the main lines that are formed by the electrodes on the building block connect opposite sides of the substrate. In such a situation having only two driving buses, e.g., each extending along an opposite side of the substrate, is sufficient to connect and drive the electrodes.

It is however not required for the electrodes in a building block to connect opposite sides of the building block. Although typically all electrodes in a building block will connect two sides of the building block, it is not required that these two sides are opposite. The reasons for this, is that an electrode may be continued by a next building block. In such a situation, most main lines will still connect the same two opposite sides, but at the edge of the substrate this may not happen, as there are no further building blocks there to carry the electrode forward. To allow for more intricate electrode designs on the building blocks, the main line may be connected to a driving bus from two sides, e.g., two sides of the substrate that are adjacent to the same corner of the substrate.

Shown in figure 1d, is a driving bus 110' extending along two sides of the substrate and a driving bus 120' extending along the other two sides of the substrate.

An advantage of this configuration is that the driving buses can be made in the same plane. This is not necessary though. A driving bus could connect from three or all four sides if desired, e.g., to further increase design freedom for the building blocks. Various examples are given herein.

Note that electrodes, e.g., driving buses, and/or main lines are allowed to overlap. This is possible, e.g., by causing a part of dielectric material between the electrodes. For example, such overlapping electrodes could be partly or fully in different planes of the substrate.

For example, in an embodiment one might depose the first electrode. Then locally depose a dielectric, and finally depose a second electrode. The dielectric is arranged to cover at least the points where the first and second electrode cross. A via could be used to the lower first electrode, e.g., to connect to it. The deposing of the electrodes may include the deposing of the driving buses.

**Figure 1e** schematically shows an example of an embodiment of a substrate 602. In figure 1e, a building block has been copied multiple times. To obtain substrate 602, the building block is copied by repeated translation in x-direction and y-direction. Each of the building blocks shown in figure 1e can be obtained by a direct translation of any other building blocks.

**Figure 1f** schematically shows an example of an embodiment of a substrate 603. In substrate 603 the building block is repeated across the substrate. In this embodiment, building blocks are translated and mirrored, in this case in two directions.

Building block 611 has been mirrored in the y-direction to form building block 621. Building block 621 has been arranged directly at the bottom of building block 611. Building block 611 has been mirrored in the x-direction to form building block 612. Building block 612 has been arranged directly at the right of building block 611. Building block 611 has been mirrored in the x-direction as well as in the y-direction to form building block 622. For example, the mirroring may have as mirroring axis a side of the building block.

By mirroring the building block, it is ensured that driving buses of the same electrode end up next to each other on the substrate. By merging these driving buses, a furrow is avoided, and diffraction is reduced.

In an embodiment, at least the electrodes on the substrate have mirror symmetry; in an embodiment the electrodes and driving buses have mirror symmetry. For example, the substrate is symmetric over an x-axis and/or over a y-axis. This is an important advantage in manufacturing, as this allows the top and bottom substrate to be equal. Eliminating the need to produce separate substrates for the top and bottom of a light modulator, also eliminates the need to keep track of separate type substrates. Moreover, having symmetry in the substrates allows a broken top substrate to be replaced by a bottom substrate and vice versa-as they are the same. A straight line, e.g., a driving bus along the mirror symmetry axis is helpful as the design can be mirrored around it. Using building blocks in mirrored and unmirrored form helps to make mirror symmetric design.

This is particularly advantageous in manufacturing with photolithography steps for patterning electrodes as the same substrate patterning can be used for both substrates of the light modulator limiting production costs. Presence of straight bus bars attached on the building blocks or part of each building block facilitates this effect. Having a symmetrical design in one direction to use same electrode pattern for all substrates is possible without a straight bus bars, for example, by local modification of the electrode design at the edge of symmetry line. In an embodiment, the electrodes pattern has at least 1 symmetry in 1 direction, e.g., using tiling building blocks with mirroring and/or rotation enable electrode pattern design across the substrate.

**Figure 1g** schematically shows an example of an embodiment of a light modulator, illustrating spacers. Shown is one of the two substrates together with an electrode system, in this case two interdigitated electrodes. For example, the other substrate of the light modulator of figure 1g may have a similar design. Shown in figure 1g are spacers. One such spacer is labeled 151. Spacers are small structures placed around the substrate to keep the two substrates at a constant distance. A spacer may be a dielectric, e.g., formed from the same material as one of the substrates. A spacer may also be used for other purposes, in particular for including a vibration source between the two substrates. In that case, an electric line may extend towards a spacer to cause it to vibrate and/or to provide power to the vibration source in the spacer. Further details are provided herein.

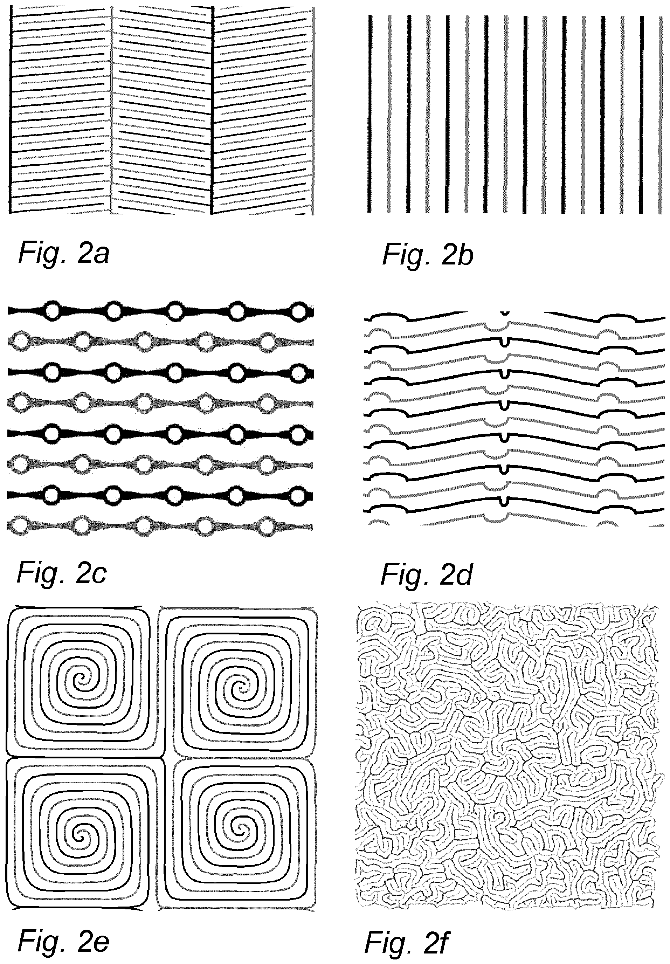

**Figures 2a-2f** schematically show examples of substrates with interdigitated electrodes. These may be embodied on a substrate with two electrodes, e.g., by alternatingly connected electrodes. Figures 2a-2d may also be embodied on a substrate with multiple electrodes, e.g., by connecting in sequences of 3 or 4 or more electrodes.

Figures 2e and 2f show designs with two electrodes on the surface of the substrate. Either design could be modified to have only a single electrode on the surface of the substrate, e.g., by removing one of the two electrodes. For example, such a modified design could be used in a light modulator that uses a substrate with a single electrode.

The designs shown can be realized in a single plane, without having crossing electrodes. In particular if these designs are connected to two driving buses, no crossing electrodes are needed. When more than two electrodes are used, or if more complicated electrode patterns are used, then crossing of the electrodes may be used, or may even become necessary. Such crossings are possible however for example, at the location where two electrode lines cross a dielectric material may be arranged between the electrodes. For example, such an insulator may be deposited at the crossing location. For example, a first electrode is in a first plane of the substrate and a second electrode is in a second plane of the substrate.

Two substrates according to an embodiment may be combined to form a light modulator. The light modulator is particularly suited to glazing. An exemplary embodiment of a light modulator is shown below.

**Figure 3a** schematically shows an embodiment of a light modulator 10, which may be applied in smart glazing.

Reference is made to patent application PCT/EP2020/052379, which is included herein by reference; this application comprises advantageous designs for light modulator, which may be further improved, e.g., by including electrodes, building blocks, and/or substrates as explained herein.

Light modulator 10 can be switched electronically between a transparent state and a non-transparent state and vice versa, or between a non-reflective state and a reflective state and vice versa. Light modulator 10 comprises a first substrate 11 and a second substrate 12 arranged opposite to each other. On an inner-side of first substrate 11 at least two electrodes are applied: shown are electrodes 13a, 13b. These at least two electrodes are together referred to as electrodes 13. On an inner-side of second substrate 12 at least two electrodes are applied: shown are electrodes 14a, 14b. These at least two electrodes are together referred to as electrodes 14. One or more of substrates 11 and 12 may be provided with a vibration source.

A fluid 15 is provided in between said substrate. The fluid comprises particles 30, e.g., nanoparticles and/or microparticles, wherein the particles are electrically charged or chargeable. For example, particles may carry a charge on their surface intrinsically. For example, the particle may be surrounded by a charged molecule.

The electrodes are arranged for driving particles 30 to move towards or away from electrodes, depending on the electric field applied. The optical properties, in particular the transparency or reflectivity of the light modulator depends on the location of particles 30 in the fluid. For example, a connection may be provided for applying an electro-magnetic field to the electrodes.

At least one, but preferably both electrodes 13 and 14 are according to an embodiment, though they are shown schematically in the figures.

In an example, substrate 11 and substrate 12 may be optically transparent outside of the electrodes, typically > 95% transparent at relevant wavelengths, such as >99% transparent. Taking electrodes into account, transparency can be much lower, e.g., 70%. The term "optical" may relate to wavelengths visible to a human eye (about 380 nm- about 750 nm), where applicable, and may relate to a broader range of wavelengths, including infrared (about 750 nm - 1 µm) and ultraviolet (about 10 nm-380 nm), and sub-selections thereof, where applicable. In an exemplary embodiment of the light modulator a substrate material is selected from glass, and polymer.

In another example, one substrate, such as a bottom substrate 12, may be reflective or partially reflective, while the top substrate 11 is transparent. The optical properties, in particular the reflectivity of the light modulator depends on the location of particles 30 in the fluid. When the panel is in the open state (vertical drive), the particles will mostly be located between opposite electrodes of the two substrates, such that incident light can pass through the transparent top substrate and the optical layer relatively unhindered and is reflected or partially reflected on the bottom substrate.

The distance between the first and second substrate is typically smaller than 30 µm, such as 15 µm. In an exemplary embodiment of the light modulator a distance between the first and second substrate is smaller than 500 µm, preferably smaller than 200 µm, preferably less than 100 µm, even more preferably less than 50 µm, such as less than 30 µm.

In an example the modulator may be provided in a flexible polymer, and the remainder of the device may be provided in glass. The glass may be rigid glass or flexible glass. If required, a protection layer may be provided on the substrate. If more than one color is provided, more than one layer of flexible polymer may be provided. The polymer may be polyethylene naphthalate (PEN), polyethylene terephthalate (PET) (optionally having a SiN layer), polyethylene (PE), etc. In a further example the device may be provided in at least one flexible polymer. As such the modulator may be attached to any surface, such as by using an adhesive.

Particles 30 may be adapted to absorb light and therewith preventing certain wavelengths from passing through. Particles 30 may reflect light; for example, the reflecting may be specular, diffusive, or in between. A particle may absorb some wavelengths and reflect others. Particles may also or instead emit light, e.g., using phosphorescence, fluorescence, or the like. Even the fluid may emit light, which emittance is modulated by changing the location of particles.

In an exemplary embodiment of the light modulator a size of the nanoparticles is from 20-1000 nm, preferably 20-300 nm, more preferably smaller than 200 nm. In an exemplary embodiment of the light modulator the nanoparticles/microparticles may comprise a coating on a pigment, and preferably comprising a core. In an exemplary embodiment of the light modulator the coating of the particles is made from a material selected from conducting and semiconducting materials.

In an exemplary embodiment of the light modulator the particles are adapted to absorb light with a wavelength of 10 nm-1 mm, such as 400-800 nm, 700 nm -1 µm, and 10-400 nm, and/or are adapted to absorb a part of the light with a wavelength-range falling within 10 nm-1 mm (filter), and combinations thereof.

In an exemplary embodiment of the light modulator the particles are electrically charged or chargeable. For example, a charge on the particles may be 0.1e to 10e per particle (5*10⁻⁷-0.1 C/m²).

In an exemplary embodiment of the light modulator the fluid is present in an amount of 1-1000 g/m², preferably 2-75 g/m², more preferably 20-50 g/m², such as 30-40 g/m². It is a big advantage that with the present layout much less fluid, and likewise particles, can be used.

In an exemplary embodiment of the light modulator the particles are present in an amount of 0.01-70 g/m², preferably 0.02-10 g/m², such as 0.1 -3 g/m².

In an exemplary embodiment of the light modulator the particles have a color selected from cyan, magenta, and yellow, and from black and white, and combinations thereof.

The light modulator can be also configured to only, or primarily, modulate non-visible light such UV or near-IR, e.g., respectively in the range of about 10 nm-380 nm, and in the range of about 750 nm - 1 µm.

In an exemplary embodiment of the light modulator the fluid comprises one or more of a surfactant, an emulsifier, a polar compound, and a compound capable of forming a hydrogen bond.

Fluid 15 may be an apolar fluid with a dielectric constant less than 15. In an exemplary embodiment of the light modulator the fluid has a relative permittivity □r of less than 100, preferably less than 10, such as less than 5. In an exemplary embodiment of the light modulator, fluid 15 has a dynamic viscosity of above 10 mPa.s.

Electrodes 13a, 13b and electrodes 14a, 14b are in fluidic contact with the fluid. The fluid may be in direct contact the electrodes, or indirectly, e.g., the fluid may contact a second medium with the electrode, such as through a porous layer. In an embodiment, the electrodes cover about 1-30% of the substrate surface. In an embodiment, the electrodes comprise an electrically conducting material with a resistivity of less than 100 n□m (at 273K; for comparison typically used ITO has 105 n□m), which is similarto an electrical conductivity >1*10⁷ S/m at 20°C).

In an embodiment of the light modulator electrodes comprise copper, silver, gold, aluminum, graphene, titanium, indium, and combinations thereof, preferably copper. The electrodes may be in the form of microwires embedded in a polymer-based substrate; for example, copper microwires.

A connection for applying an electro-magnetic field to the electrodes, wherein the applied electro-magnetic field to the electrodes provides movement of the nano- and microparticles from a first electrode to a second electrode and vice versa. A connection for applying an electro-magnetic field to the electrodes may be provided. For example, in an exemplary embodiment of the light modulator an electrical current is between -100-+100µA, preferably -30-+30 µA, more preferably -25-+25 µA. For example, a power provider may be in electrical connection with the at least two electrodes. The power provider may be adapted to provide a waveform power. At least one of amplitude, frequency, and phase may be adaptable to provide different states in the light modulator. For example, these aspects of the power may be adapted by a controller.

Light modulator 10 may comprise one or more segments, a segment being a single optically switchable entity, which may vary in size. The substrates enclose a volume, which may be a segment, at least partly.

The present device may comprise a driver circuit for changing the appearance of (individual) segments by applying an electro-magnetic field. As such also the appearance of the light modulator, or one or more parts thereof, may be changed. For example, a segment may have an area of at least 1mm². The present design allows for stacking to allow for more colors; e.g., for full color applications a stack of two or three modulators could provide most or all colors, respectively.

Having one or more segments allows the light modulator to be controlled locally; this is advantageous for some applications, but not necessary. For smart glazing, a light modulator may be used with or without segments. For example, applied in smart glazing, transparency or reflectivity may be controlled locally, e.g., to block a sun-patch without reducing transparency or reflectivity in the whole window. Segments may be relatively large, e.g., having a diameter of at least 1 mm, or at least 1 cm, etc.

In an exemplary embodiment of the light modulator substrates (11,12) are aligned, and/or electrodes (13,14) are aligned. For example, electrodes 13a, 13b and electrodes 14a, 14b may be aligned to be opposite each other. In aligned substrates, electrodes on different substrates fall behind each other when viewed in a direction orthogonal to the substrates. When the light modulator is disassembled, and the substrates are both arranged with electrodes face-up, then the electrode patterns are each other's mirror image.

Aligning substrates may increase the maximum transparency or reflectivity of the light modulator, on the other hand, when selecting a light modulator for more criteria than the range of transparency or reflectivity, etc., it may be better not to align or not fully align the two substrates. Light modulators can be stacked. For example, two stacked light modulators can be made from three substrates, wherein the middles one has electrodes on both its surfaces. In an embodiment of the light modulator optionally at least one substrate 11,12 of a first light modulator is the same as a substrate 11,12 of at least one second light modulator. For stacked modulators, alignment may also increase maximum transparency or reflectivity, but it may be detrimental to other considerations, e.g., diffraction.

**Figure 3b** schematically shows an example of an embodiment of a light modulator 40. Light modulator 40 is similar to light modulator 10, except that it comprises multiple optical layers; in the example as shown two optical layers. There may be more than two optical layers. Each optical layer is arranged between two substrates. Light modulator 40 can be regarded as a stack of two-substrate light modulators as in figure 3a. As shown, light modulator 40 comprises three substrates: first substrate 41, second substrate 42 and third substrate 43. Between substrates 41 and 42 is an optical layer, and between substrates 42 and 43 is an optical layer. The optical layers may be similar to those in light modulator 10. A controller 46 is configured to control electrical current on the electrodes of the substrates. For example, in figure 3b, controller 46 may be electrically connected to at least 4 times 2 equals 8 electrodes.

Interestingly, the particles in the multiple optical layers may be different so that the multiple layers may be used to control more optical properties of the light modulator. For example, particles in different optical layers may absorb or reflect at different wavelengths, e.g., may have a different color. This can be used to create different colors and/or different color intensities on the panel by controller 46. For example, a four-substrate panel may have three optical layers with different color particles, e.g., cyan, yellow, and magenta, respectively. By controlling the transparency or reflectivity for the different colors a wide color spectrum may be created.

The surfaces of the substrates that face another substrate may be supplied with two or more patterns, e.g., as in an embodiment. For example, the outer substrates 41 and 43 may receive electrodes only on an inner side, while the inner substrate, e.g., substrate 42, may have electrodes on both sides.

Substrates 41 and 42 may together be regarded as an embodiment of a light modulator. Likewise, substrates 42 and 43 may together be regarded as an embodiment of a light modulator.

One or more of substrates 41, 42, and 43 may be provided with a vibration source.

**Figure 3c** schematically shows an example of an embodiment of a car 20 having smart glazing for windows 21. This is a particularly advantageous embodiment, since while driving the level of incident lighting can change often and rapidly. Using smart glazing in a car has the advantage that light levels can be maintained as a constant level by adjusting the transparency of the car windows. Moreover, the reduced diffraction effect improves safety as it reduces driver distraction. Car 20 may comprise a controller configured for controlling the transparency or reflectivity of windows 21.

Smart glazing can also be used in other glazing applications, especially, where the amount of incident light is variable, e.g., buildings, offices, houses, green houses, skylights. Skylights are windows arranged in the ceiling to allow sunlight to enter the room.

The light modulator may have two optical states, e.g., a transparent state and a non-transparent state, or a non-reflective state and a reflective state. The light modulator, e.g., light modulator 10 or light modulator 40 may be configured to
- switch to the second optical state, e.g., the non-transparent state or to the reflective state by creating an alternating voltage on at least one of the first and second substrates, applying an alternating current between at least a first electrode and a second electrode on the first substrate and/or between a first electrode and a second electrode on the second substrate, and
- switch to the first optical state, e.g., the transparent state or to the non-reflective state by creating an alternating voltage between the first and second substrate, applying an alternating current between a first electrode on the first substrate and a first electrode on the second substrate, and/or between a second electrode on the first substrate and a second electrode on the second substrate.

The electrode pattern on the first substrate is arranged at least in part in the same pattern as a second electrode on the second substrate. Typically, the electrodes oppose each other, but the pattern of the first electrode and second electrode may also be shifted with respect to each other.

A protective coating may be provided on at least a part of the inner surface area of at least one of the first substrate and the second substrate is provided.

A driving signal applied to electrodes typically has a varying voltage. For example, a power provider may be operated at an AC frequency for switching to a transparent state or to a non-transparent state. Such a signal may have a frequency between, say, 1-1000 Hz. A balanced electrolysis current may be obtained by continuously switching the polarity of oppositely charged electrodes on the first and on the second substrates and/or between the first and the second substrates.

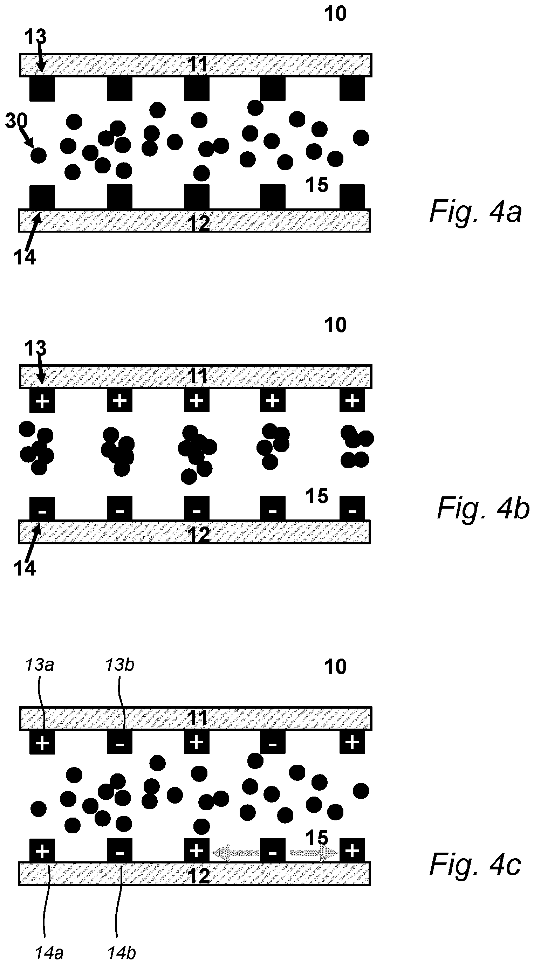

**Figures 4a-4b** schematically show a side view of an embodiment of a light modulator in use. In this figure only the electrodes are shown. The vibration source(s) are not shown in these figures.

Applying an electric field to the electrodes on the substrates causes an electrical force on the particles. Using this effect, the particles can be moved around, and so different transparency or reflectivity states can be caused in the light modulator. A controller may control the electric field, e.g., its amplitude, frequency, and phase. In an embodiment, the controller is connected to at least four electrodes: two for each substrate. But more electrodes may be used and connected to the controller; for example, more than 2 electrodes may be used for a substrate to better fine-tune grey scaling and driving to non-transparent or reflective state. Multiple electrodes may also be used to support multiple segments on the substrate.

**Figure 4a** shows the light modulator without an electric field being applied. No electric force is yet applied on particles 30 suspended in fluid 15, in figure 4a.

In the configuration shown in figure 4a, a conducting electrode pattern, arranged on the top substrate is completely or substantially aligned with a conducting electrode pattern on the bottom substrate. The conducting electrode pattern may be deposited on a transparent or (partially) reflective glass substrate or may be embedded in a plastics substrate, etc.

Alignment between the top-electrode pattern and the bottom electrode pattern contributes to a wider range of achievable levels of transparency or reflectivity. However, alignment is not needed, as similar effects can be obtained without alignment. Without alignment, a range of transparency or reflectivity is likewise obtained.

Note that in these examples, reference is made to the top substrate and the bottom substrate to refer to substrate that is higher or lower on the page. The same substrates could also be referred to, e.g., as the front substrate and back substrate, since in a glazing application, the substrates would be aligned vertically rather than horizontally.

**Figure 4b** shows the light modulator wherein, say at an instance P1, a potential +V1 is applied to each microwire electrode on the top substrate, while a negative voltage, say -V1, is applied to each microwire electrode of the bottom substrate. Thus, in this case, the same positive potential is applied to all electrodes 13, and the same negative potential is applied to electrodes 14. The difference in potential causes negatively charged particles to flow to the vicinity of the electrodes of the top substrate, where the particles will substantially align with the top electrodes. As a result, if both the top and bottom substrate are transparent, the transparency of light modulator 10 will increase. Likewise, if, e.g., the top substrate is transparent and the bottom substrate is reflective, the reflectivity of light modulator 10 will increase If the solution contains positively charged particles they will flow to the vicinity of the electrodes of the bottom substrate, where those particles will substantially align with the bottom electrodes.

A similar transparency can be achieved, when in a second instance, P2, of the on-state, the voltages of the top electrodes and bottom electrodes are reversed in contrast to the instance of P1. In the instance P2, the voltage of each electrode on of the top substrate are now supplied with a negative potential -V1 while the voltages of the aligned electrodes of the bottom substrate are supplied with a positive potential. This state is similar to the state shown in figure 4b, but with top and bottom substrates reversed. In this configuration, the transparency of light modulator 10 is also high. If reflective particles are used, then reflectivity is low.

Interestingly, by switching between a positive potential at electrodes at the top substrate, e.g., as shown as electrodes 13 in figure 4b (and a negative potential on electrodes 14), and a positive potential at electrodes at the bottom substrate, e.g., as shown as electrodes 14 in figure 4b, the transparency or non-reflectivity can be maintained, while decreasing corrosion damage to the electrodes. This alternating electric field can be achieved by applying alternating electric potentials to the top and bottom electrodes.

Applying an AC waveform is optional, but it is a useful measure to increase the lifetime of the light modulator by reducing corrosion. Corrosion can form for example, when using copper electrodes, since copper ions dissolve in an ionic fluid at one substrate and flow to electrode on the opposite substrate, where they deposit. By applying a waveform, the direction of copper ion transport is frequently reversed, thus reducing corrosion damage. Between the two instances P1 and P2 the corrosion current between the two substrates is balanced or substantially, e.g., >95%, balanced, e.g., as corrosion rate of an electrode of the top plate occurs there is a balancing deposition of copper on the bottom electrode between each instance of time, P1 and vice versa in instance P2. Therefore, the particles are transitioning or migrating continuously between top and bottom electrode, and the light modulator or smart window is always in the on-state while the dynamic electrolysis current between the top and bottom electrode is constant thus there is no or a negligible net loss of electrode material on the top and bottom substrates.

**Figure 4c** shows how a state of decreased transparency or increased reflectivity can be obtained. An alternating voltage is applied on the same substrate. For example, in an embodiment a potential +V2 is applied to a first electrode and the next immediate neighboring electrode has an opposite potential -V2 etc., as shown in fig. 8c. This can be obtained by applying the potential +V2 to electrode 13a and the opposite potential -V2 to electrode 13b. On the opposite substrate the potential +V2 may be applied to electrode 14a and the opposite potential -V2 to electrode 14b. For example, the electrodes may be arranged so that the electrodes on the substrates are aligned; an electrode on the top substrate having an opposite electrode on the bottom substrate, and vice versa. For example, to decrease transparency or increase reflectivity, the opposite electrode may receive the same potential, while neighboring electrodes receive an opposite potential. An embodiment is shown in figure 4c, wherein four electrodes are indicated with the reference numbers 13a, 13b, 14a and 14b, and the rest of the electrodes continue to alternate.

By using this AC drive cycle between top and bottom substrates, diagonal and lateral electric fields are generated between the two substrates thereby causing haphazard diffusion of the particles thereby creating the closed state of the light modulator. As a result of this configuration, the particles migrate diagonally and laterally between the top and bottom substrate and diffusion of particles into the visible aperture of the light modulator contributes to the closed, opaque state of the light modulator.

As for the transparent state shown in figure 4b, a waveform may be applied to the electrodes, e.g., so that electrodes that are shown in figure 4b with a positive potential become negative and vice versa. As in figure 4b applying a waveform, e.g., between electrodes 13a and 13b and between 14a and 14b reduces corrosion damage to the electrodes.

The AC drive cycle may be implemented by using an interdigitated line configuration combining the top and bottom electrode configuration shown in plan view in figures 1a, 1b, 2a-2f, etc.

The extent with which transparency or reflectivity is increased or decreased in figures 4b and 4c depends on the voltage and frequencies difference. By varying the voltage difference, the amount by which the transparency or reflectivity increases, respectively, decreases, is controlled. For example, a curve representing light transmission versus voltage may be determined, e.g., measured. To obtain a particular level of light transmission, e.g., a particular transparency, e.g., a particular grey-scale level, the corresponding voltage, e.g., AC voltage may be applied. By interpolating the signals for a transparent or for a non-transparent state, levels in between transparent and non-transparent may be obtained. Likewise, a curve representing light reflection versus voltage may be determined, e.g., measured. To obtain a particular level of reflectivity, the corresponding voltage, e.g., AC voltage may be applied. By interpolating the signals for a reflective or for a non-reflective state, levels in between reflective and non-reflective may be obtained.

Different electrode patterns may be used for a light modulator. The electrode patterns may each provide a range of greyscales, e.g., levels of transparency or reflectivity, that the light modulator can attain. However, the particular range of greyscale for any particular electrode pattern may be different from another electrode pattern. In other words, although different patterns give an increased transparency or reflectivity or an increased opacity, the exact response to a drive signal depends on many factors, including the particular pattern that is used. The variations in the optical properties of a light modulator may have a fine resolution, e.g., below 1mm. Note that no pixilation of the light modulator is needed to achieve different optical patterns, e.g., logos, visible in the light modulator.

This effect may be used to embed visible images in the light modulator by locally changing the electrode pattern on the substrates of a light modulator. For example, one may locally have greyscales that have a permanent off-set in greyscale relative to each other, because of a different electrode pattern. For example, by locally changing the electrode pattern or its pitch, the maximum transparency or reflectivity can be altered.

The result is an area on the light modulator which has a different intensity of greyscale, e.g., a different greyscale, or of coloring. The area may have the same color-point, though. In an embodiment, they may switch together with the rest of the window, although at a different rate. For example, even if the same voltage is applied to the electrodes in two different areas, they cause a different transparency state, e.g., different transmission level, due to different electrode patterns. For example, a curve representing transmission versus voltage may be shifted. For example, if voltage control is changed in the same way in both areas, then in both areas light transmission may change, but with a different amount. An area may also be made less response to a drive signal by reducing the density of electrodes; in particular, an area may be made not to switch at all, e.g., by not applying electrodes in the area.

For example, the electrode material may be copper, aluminum, gold, indium-tin oxide (ITO), etc. ITO is transparent while Cu/AI is reflective, thus using a different electrode material, a different appearance may be obtained, irrespective of the voltage driving. Likewise, different materials with a different resistance will give rise to a different electric field. For example, ITO will have a smaller electric field, even though driven with the same voltage.

An embodiment of a method of modulating light, comprises applying an electric potential to multiple electrodes applied to two opposing substrates according to an embodiment to obtain an electro-magnetic field between the multiple electrodes providing electrophoretic movement of the particles towards or from one of the multiple electrodes causing modulation of light shining through the substrates, wherein the two opposing substrates are as in an embodiment.

Various modes of operation are supported by an embodiment of a four-electrode light modulator system.

### Horizontal drive

Horizontal drive is a mode in which lateral electric fields are created along the substrate. The light modulator may apply alternating voltage on the interdigitated electrodes to cause the particles in the optical layer to move parallel to the substrate, thus decreasing transparency.

### Vertical drive

Vertical drive is a mode in which particles are aligned orthogonally to the substrates. Electrodes opposite to each other on opposite substrates receive a different voltage.

### Maintaining a gray scale

The light modulator drive system may apply 0 voltage on the electrodes most of the time, but if the gray scale is dropping, due to the particles dispersing, then briefly the electrodes and may be driven as in vertical drive.

In all three modes, the driving may use DC or AC signals. Preferably, AC signals are used.

**Figure 5a** schematically shows an example of an embodiment of a substrate 500 for use in an embodiment of a light modulator.

Substrate 500 comprises an electrode system extending across the substrate. In this embodiment, the electrode system is in the form of two interdigitated electrodes, e.g., according to any design shown in figures 2a-2f, or yet another design. The electrode system may be any other electrode system for a light modulator, of which many are known, and some of which are described herein.

A first electrode of the electrode system comprises an optional driving bus 510 and multiple main lines stretching across the substrate. One of the main lines in the first electrode is indicated with reference label 511.

A second electrode of the electrode system comprises an optional driving bus 520 and multiple main lines stretching across the substrate. One of the main lines in the second electrode is indicated with reference label 521.

The main lines of the first and second electrodes are interdigitated, e.g., the main lines of the first and second electrodes alternate across the substrate.

To complete a light modulator, first substrate 500 may be combined with a second substrate. As for the first substrate, also for the second substrate, and its electrode system (if any) there are many choices. For example, the electrode system for the second substrate may be identical to the first substrate but mirrored, so that main lines on the first and second substrate align with each other. Enclosed between the first and second substrate is an optical layer. The optical layer comprises a fluid that comprises particles.

The position of the particles can be modulated by applying an electric potential to the electrode system(s) causing modulation of light passing through the substrates.

For example, the light modulator may be connected to a controller to control the electric potential in the electrode system(s). For example, in a typical embodiment, a first substrate comprises two interdigitated electrodes, and a second substrate comprises two interdigitated electrodes. The controller being connected or connectable to all these electrodes. For example, a controller such as controller 16 or controller 46 may be used. The controller typically comprises a processor system, e.g., one or more microcontrollers, and a memory storing computer processor instructions that when executed cause the processor system to control the light modulator, e.g., control the light modulator to transition between different optical states, e.g., different levels of transparency.

In an embodiment, a dynamic glazing, or a smart glazing for a window comprises a light modulator as in an embodiment.

The light modulator comprises at least one vibration source arranged on a surface of the first substrate and/or on the second substrate. Figure 5a shows one of the first and second substrates and shows vibration source 531 and vibration source 532. There may be more than two vibration sources.

The vibration sources are configured to deliver a mechanical wave to at least part of the substrate. A mechanical wave includes the periodic displacement of matter and/or periodic pressure variations, distinguishing it from an electro-magnetic wave.

The mechanical wave may propagate through the substrate, e.g., as a shear wave. The mechanical wave may also propagate through the fluid-either directly from the vibration source, or indirectly as a secondary effect, from the substrate to the fluid at a distance from the vibration source, after the wave traveled the distance through the substrate first. The reverse effect is also possible, a mechanical wave that is primarily imparted to the optical layer fluid, e.g., by a vibration source enclosed in the optical layer, may cause a mechanical wave in a substrate.

The mechanical wave may thus comprise a substrate wave and/or a fluidic wave. Note that as the fluid is enclosed between the first and second substrate, the fluidic wave is an enclosed fluidic wave. A substrate wave may facilitate cleaning of the substrates, e.g., by dislodging contaminants, including moisture. A fluidic wave may facilitate dispersing of particles, e.g., during a horizontal drive. Both types of waves may facilitate the dislodging of stuck particles, e.g., particles that have become fixed to a substrate.

The mechanical wave may be transversal and/or longitudinal. The substrate wave is typically transversal, though may have a longitudinal component. The fluidic wave is typically longitudinal, though there may be a transversal component, e.g., caused by the particles in the fluid.

In an embodiment, the vibration source is configured for an acoustic wave, also referred to as a pressure wave, e.g., a longitudinal fluidic wave that propagates through the fluid. The acoustic wave comprises periodic compressions and rarefactions in the fluid.

Note that even a mostly standing wave in the fluid while the system is driven to disperse particles, e.g., during a horizontal drive, will have a significant effect on dispersal. The reason being that the electronic field in the optical layer is typically not uniform but comprises regions in which particles are more or less moved. In some regions, forces on the particles may be virtually absent-such regions being referred to as static or dead regions. Although the presence of static regions is not necessarily an objection to reaching the fully opaque state, since particles may naturally float outside of static regions, they decrease the transition speed. Even inducing some movement in the particles will make it less likely that a particle remains stuck in a static region for some time.

The vibration source may be controlled to generate and deliver a mechanical wave of specific amplitude, frequency, and phase to at least part of the light modulator surface or to a specific region on it.

The light modulator may be connected or connectable to a further controller configured to control the mechanical wave generated by the vibration source(s), e.g., by sending an electronic signal to the vibration source(s) causing the vibration source(s) to generate a mechanical wave. The further controller may be configured to cause a mechanical wave with a particular specific amplitude and/or frequency, and optionally a specific phase. Preferably the controller controlling the optical properties of the light modulator and the further controller are integrated in a single controller controlling both aspects. From here on it will be assumed that this integration has taken place, though if desired the controller could be split into two controllers that control these different aspects.

In an embodiment, there may be multiple vibration sources are spread across at least one of the first and second substrate. For example, figure 5a shows two vibration sources. For example, the vibration sources may be arranged in a symmetrical pattern, e.g., point symmetrical around a center of the substrate, or asymmetric or even random pattern. Although the electrode systems on the first and second substrate may be aligned with each other, vibration sources on opposite substrates may be arranged at different positions, e.g., non-overlapping positions, to increase the combined reach of the vibration sources.

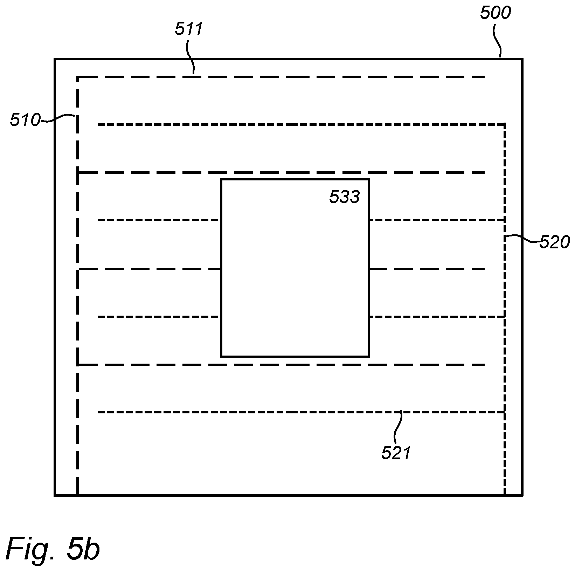

Preferably, the mechanical wave is delivered at least to an area in the center of the surface of at least one of the first and second substrate, though preferably to the entire surface of at least one of the first and second substrate. In figure 5a, the vibration sources are arranged away from the center near the sides of the substrate. **Figure 5b** schematically shows an example of an embodiment of a substrate for use in an embodiment of a light modulator. Figure 5b shows an embodiment of a substrate with a single vibration source arranged at the center of the substrate. This maximizes the reach of the vibration source. More than one vibration source may be applied at or near the center.

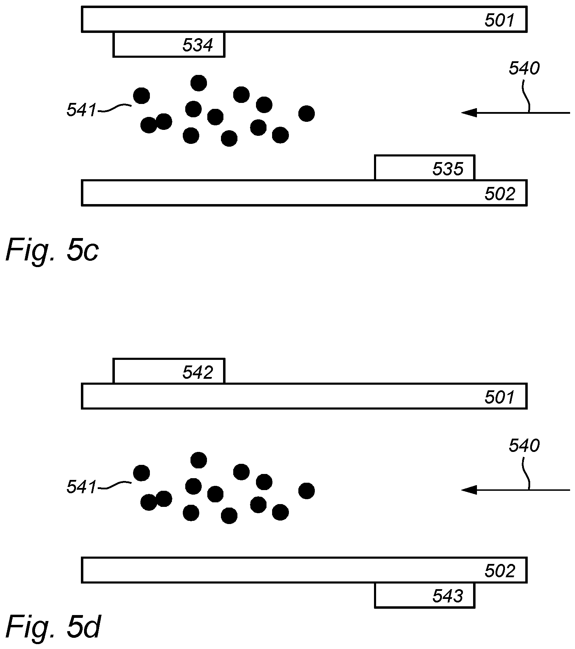

**Figure 5c** schematically shows a side-view of an example of an embodiment of a light modulator. The light modulator includes two substrates: substrate 501 and substrate 502. Each one of the substrates could be as in an embodiment, e.g., as substrate 500. In figure 5c, a vibration source 534 is applied to a side of first substrate 501 that faces towards the optical layer. A vibration source 535 is applied to a side of second substrate 502 that faces towards the optical layer. That is, the vibration sources are enclosed in the optical layer. Also shown in figure 5c is the optical layer 540, and schematically particles 541. Note that particles 541 extend over the full optical layer and are not restricted to a left part as schematically shown.

**Figure 5d** schematically shows a side-view of an example of an embodiment of a light modulator. The light modulator includes two substrates: substrate 501 and substrate 502. Each one of the substrates could be as in an embodiment, e.g., as substrate 500. In figure 5d, a vibration source 542 is applied to a side of first substrate 501 that faces away from the optical layer. A vibration source 543 is applied to a side of second substrate 502 that faces away from the optical layer. That is, the vibration sources are outside of the optical layer.

The options illustrated in figures 5c and 5d may be combined. For example, a vibration source may be applied both inside and outside of the optical layer. For example, substrate 501 from figure 5c may be combined with substrate 502 from figure 5d.

Various types of vibration sources may be used.

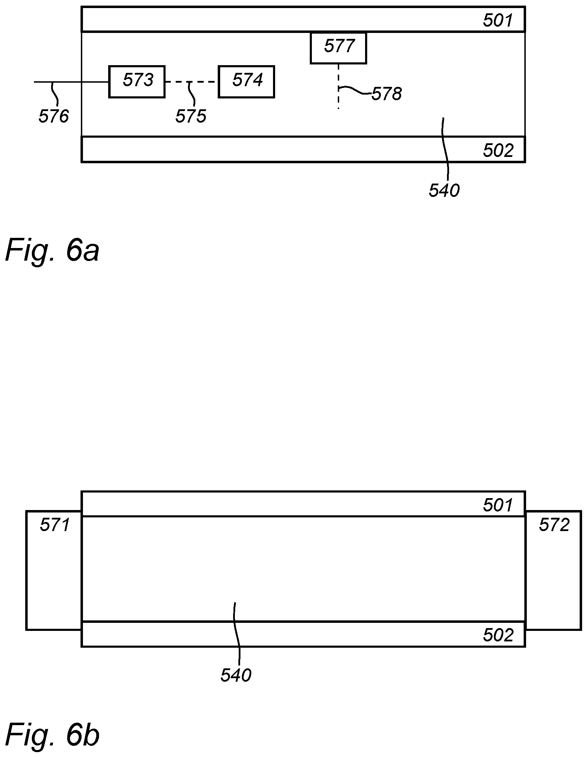

In an embodiment, a vibration source comprises a vibrating diaphragm either partly or fully encircled by the fluid, e.g., liquid, in the optical layer. The vibrating diaphragm is configured to provide a pressure wave to the fluid. The vibrating diaphragm and/or pressure wave may also cause a vibration of one or both of the substrates. **Figure 6a** schematically shows a side-view of an example of an embodiment of a light modulator. Figure 6a shows two designs of a vibration source comprising a diaphragm.

In a first option, a diaphragm 575 is clamped on both sides. Shown are clamps 573 and 574. Diaphragm 575 may be a strip, in which case clamps 573 and 574 may be different. On the other hand, the clamp may surround diaphragm 575, e.g., a disc shaped diaphragm and an annular clamp. In that case clamps 573 and 574 may be part of the same clamp. The vibration source may be positioned by connecting clamps 573 and 574 to a substrate, e.g., by positioning them on the surface or by keeping them in place with wires, spacers or the like. A controlling and/or powering connection 576 is shown, in this case to a side of the light modulator.

In a second option, a diaphragm 578 is clamped on one side. Shown is clamp 577. Diaphragm 578 may be a strip. The vibration source may be positioned by connecting clamp 577 on the surface as shown, or by keeping it in place with wires, spacers or the like. A controlling and/or powering connection is not shown separately. For example, controlling and/or powering connection may comprise an electrode line on a surface of a substrate, in this case, substrate 501.

Diaphragms 575 and/or 578 may comprise a piezoelectric material, in which case the diaphragm is vibrated through the piezoelectric effect. Clamps 573, 574, and/or 577 may comprise other means of vibrating the diaphragm, e.g., a piezoelectric or electromagnetic actuator. In this case, diaphragms 575 and/or 578 may comprise, e.g., metal and/or plastic, e.g., polyethylene.

In an embodiment, a vibration source comprises one or more actuators arranged at a side of the light modulator. On each of two opposite sides of the light modulator, one or more actuators may be arranged. For example, one or more actuators may be situated on the left side of the light modulator, and one or more actuators may be on the right side of the light modulator. These actuators are configured to apply pressure to their respective sides of the light modulator, e.g., through a mechanical action. Additionally, the actuators may be configured to pull on their respective sides of the light modulator. By controlling these actuators to provide periodic push and optional pull actions, where the actuators on opposite sides of the light modulator are out of phase, a pressure wave can be created in the optical layer. **Figure 6b** schematically shows a side-view of an example of an embodiment of a light modulator. Actuators 571 and 572 are arranged on opposite sides of the light modulator.

The actuators may be implemented in various different ways: Piezoelectric actuators use the piezoelectric effect, expanding when voltage is applied, offering precise control and making them suitable for creating high-frequency pressure waves. Electromagnetic actuators comprising a coil and magnetic core, with the coil producing a magnetic field when electrified, thus moving the core. This mechanism can provide strong, precise forces. Hydraulic or pneumatic actuators leverage fluid or air pressure to induce motion, potentially producing significant forces to generate pressure waves within the light modulator. For example, micro-hydraulics may be used, e.g., for actuators 571 and 572.

In an embodiment, the vibration sources comprise piezoelectric materials arranged to generate the mechanical wave. Piezoelectric materials are a preferred material. Various types of piezoelectric materials may be used, and moreover they may be used in different ways.

To stimulate the piezoelectric material into vibration, an alternating voltage (AC) may be applied. The vibration's frequency and amplitude may be determined by the voltage's frequency and amplitude. The applied voltage can be modulated to control the vibrations imparted to the substrate and/or optical layer accurately.

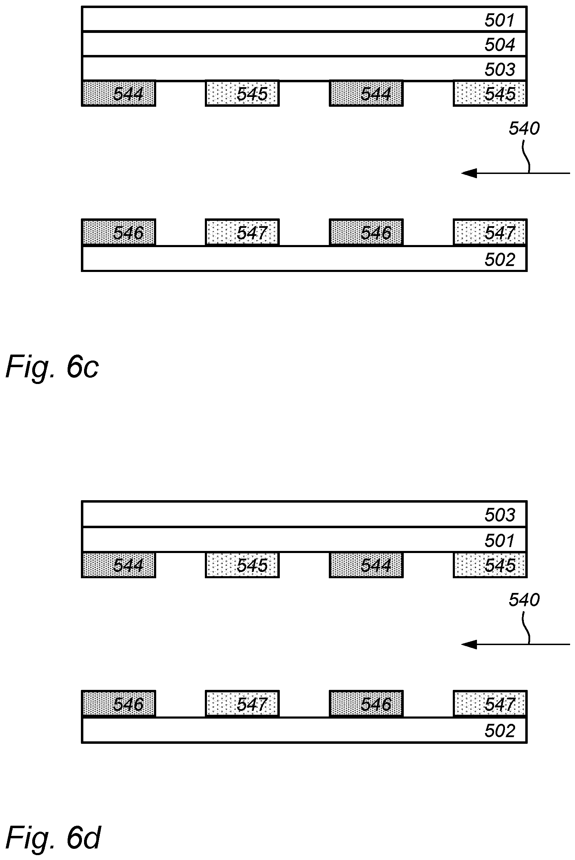

In an embodiment, a transparent piezoelectric material is used. Using a transparent piezoelectric material is advantageous, as it can be applied without patterning, e.g., using full deposition instead. **Figure 6c** schematically shows a side-view of an example of an embodiment of a light modulator. Shown in figure 6c are substrates 501 and 502 enclosing an optical layer 540. An electrode system is applied on each substrate. In this case, each electrode system comprises two interdigitated electrodes. Shown are cross sections of electrodes 544 and 545 on substrate 501, and cross sections of electrodes 546 and 547 on substrate 502. On substrate 501 a piezoelectric layer 504 has been deposed on the optical layer-side of substrate 501 followed by a dielectric layer 503. The dielectric layer 503 causes that the electrode system on the substrate does not electrically connect to the piezoelectric layer 504. An additional layer between the piezoelectric layer 504 and the electrode system 544, 546 may also improve adhesion of the electrode system. This is advantageous as the piezoelectric layer 504 cause vibration of the electrodes. The dielectric layer is not strictly necessary but avoids that electric signals on the electrode system could cause unwanted vibration of piezoelectric layer 504.

**Figure 6d** schematically shows a side-view of an example of an embodiment of a light modulator. In this variant the piezoelectric layer 504 is applied not to the optical layer-side side but on the side facing away from the optical layer. As substrate 501 is electrically isolating, no dielectric layer 503 is used here. Note a coating could be applied to piezoelectric layer 504.

Substrate 502 is shown here without a piezoelectric layer in figures 6c and 6d but could be provided with one as well. Piezoelectric layer 504 may be powered and/or controlled from electrodes attached to the layer, which are not separately shown in figure 6c and 6d. A coating may be applied to the electrode systems in figures 6c and 6d, and in fact in general.

Piezoelectric layer 504 is preferably transparent, especially in the case of dynamic glazing, but this is not necessary. For example, in the case of a display application, or a dimmable mirror in which only one of the first and second substrates are transparent, piezoelectric layer 504 could be non-transparent as well. A transparent piezoelectric material is LiNbO3. Another is described in the paper 'Transparent ferroelectric crystals with ultrahigh piezoelectricity', by Chaorui Qiu et al.

In an embodiment, the vibration source comprises a patterned piezoelectric material. The piezoelectric material in this case may be non-transparent. In an embodiment, piezoelectric material is patterned across the surface of the first and/or second substrate. One possibility is to pattern the piezoelectric material in lines across the surface of the first and/or second substrate. Patterning of electrodes and piezoelectric material is conveniently done using a stepper, although this is not strictly necessary, e.g., in case of a smaller light modulator.

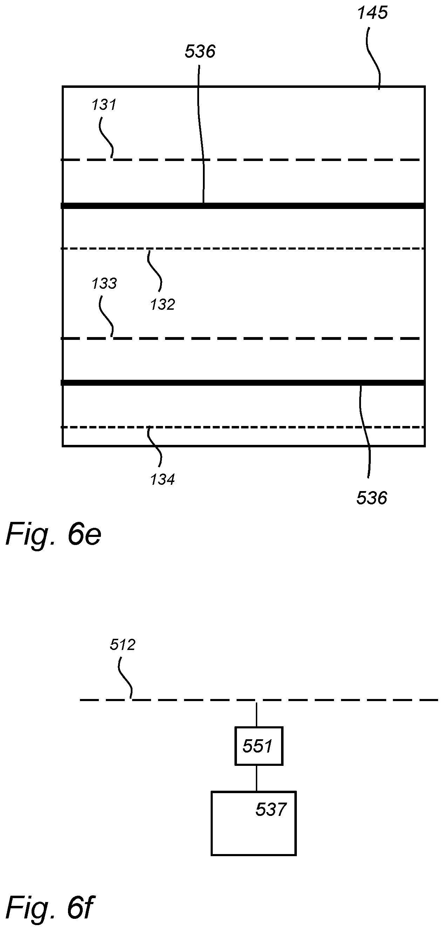

**Figure 6e** schematically shows an example of an embodiment of a substrate for use in an embodiment of a light modulator. Shown is a building block 145 which may be stepped across the surface of a substrate. Building block 145 is a variant of building block 140 but includes piezoelectric lines 536. Note that, although lines 131-134 and piezoelectric lines 536 are shown in the same schematic figure, they may be patterned in different phases of the manufacturing of the substrate.

Including vibrating lines, such as piezoelectric lines 536, that extend over the surface of the substrate have the advantage of generating vibrations everywhere and not only in, say, the edges of the device, or only the center of the device.

In an embodiment, the piezoelectric material is patterned and configured to provide a localized mechanical wave. For example, the first substrate and the second substrate may enclose a plurality of pixels, each with its own electrode system. Having a localized wave allows accelerated dispersion of particles in the pixel. The optical layer may be compartmentalized for each pixel, but this is not necessary; one optical layer could serve multiple, or all, pixels. The localized wave may be restricted to one pixel, but may also extend to more than one, but fewer than all pixels, e.g., between from 4 to at most 25 pixels.

In an embodiment, the vibration source comprises an electrostatic actuator. This vibration source may be applied inside and/or outside the optical layer. The electrostatic actuator may comprise two plate electrodes, at least one of which is movable. For example, a first plate may be attached to the optical layer-side of a substrate while the other is arranged in the optical layer. By applying a voltage to the electrodes, an electric field is generated which induces forces that either attract or repel the plates. When these plates move in response to the electrostatic force, they can generate mechanical vibrations. The magnitude and frequency of these vibrations can be controlled by varying the applied voltage, allowing for precise control of the vibration.

By positioning the electrostatic actuator inside the optical layer, the vibrations can directly interact with the fluid and particles. This can provide rapid and responsive modulation capabilities. When positioned outside the optical layer, the electrostatic actuator imparts vibrations through the substrate.

In an embodiment, the vibration source comprises an electromagnetic actuator. Such a vibration source is more easily applied outside the optical layer. The vibration source may comprise a coil and a magnetic component. A current passing through a coil creates a magnetic field, which in turn can induce movement in a component. This movement can generate mechanical vibrations, the amplitude and frequency of which can be precisely controlled by modulating the applied current.

Due to their typical size and design complexities, electromagnetic actuators are more conveniently situated outside the optical layer. Positioned in this manner, they can transfer vibrations through the substrate, influencing the fluid and particles in the optical layer.

In an embodiment, the vibration source comprises a mechanical exciter. Such a vibration source is more easily applied outside the optical layer. For example, the vibration source may comprise a spring. Mechanical exciters can encompass a range of mechanisms and use the potential or kinetic energy in physical systems to produce vibrations. In one example, the mechanism is a spring-based system. For example, the vibration source may comprise a spring attached to a mass. When the spring is displaced from its equilibrium position, it exerts a force on the mass. This results in oscillatory motion, generating mechanical vibrations. The frequency and amplitude of these vibrations can be adjusted by altering the stiffness of the spring, the mass of the object, or both. Due to the inherent physical nature and dimensions of many mechanical exciters, they are often more suitably positioned outside the optical layer.

There are various ways to control the vibration source(s). For example, the light modulator may comprise a signal input configured to receive an electric vibration signal indicating the mechanical wave. The vibration source is configured to deliver the mechanical wave as indicated in response to receiving the electric vibration signal at the signal input.

For example, a controller may be connected to the vibration source(s), possibly through the signal input. The controller may be configured to control a frequency and/or amplitude of the mechanical wave generated by the vibration source(s).

Using a controller allows a more sophisticated use of the vibration source. For example, the controller may select a frequency and/or amplitude of the mechanical wave from multiple frequencies and/or amplitudes, and to cause the vibration source to deliver the mechanical wave at the selected frequency and/or amplitude. Accordingly, depending on the application of the vibration source, different frequency and/or amplitude may be selected. For example, a different frequency and/or amplitude may be selected for dispersing particles than for cleaning the light modulator. Suitable frequency and/or amplitude depend on the light modulator, e.g., its dimensions, the number of vibration sources, the type of particles and/or contaminant. However, frequency and/or amplitude can be established empirically.

The controller may even use multiple different frequencies and/or amplitudes. For example, in an embodiment the controller is configured to cycle through multiple frequencies and/or amplitudes for the mechanical wave, wherein different frequencies and/or amplitudes are utilized for specific durations. Such a program is beneficial for cleaning the light modulator, as different types of contaminants, e.g., dirt versus moisture respond better to different frequencies and/or amplitudes.

The vibration sources are useful to clean the light modulator, or at least to facilitate cleaning. For example, the vibration source may be arranged to dislodge particles and/or residue from the at least part of the first and/or second substrate.

Another advantageous application is to accelerate the dispersion of particles. When the light modulator transitions from a transparent to a non-transparent state, or less transparent state particles need to transition from an aligned state to a dispersed state. The same problem occurs in the transition from a non-reflective to a more reflective state. This dispersion will occur naturally under the control of the electrode system but can be accelerated by a mechanical wave.

Vibration sources may improve black level performance of the light modulator. The mechanical waves generation could be used independently or combined with the controller for electro-magnetic fields generation.

In a light modulator, the mechanical waves travel through the substrates and the fluid that is comprised in its optical layer. The propagation of these waves can instigate vibrations or movements in the particles contained within the optical fluid, enabling the repositioning of these particles.

For example, the controller may be configured to transition the optical layer from a more transparent state to a less transparent state, and at the same time to deliver the mechanical wave to assist dispersion of the particles. For example, a pressure wave in the optical layer would be suitable for this.

In an embodiment, the controller may be configured to track the electrophoretic and/or dielectrophoretic movement of the particles in the optical layer, and to deliver the mechanical wave in dependence on the tracked movement. For example, the light modulator may comprise a sensor for measuring the transparency of the light modulator. For example, the electrode system may comprise a current sensor, e.g., a current sensor in each electrode of two interdigitated electrodes; preferably at both substrates. From the measured current changes, the dispersion progress may be derived. This has the advantage that the vibration is used only when needed and/or only for so long as needed.

The light modulator, e.g., a controller of the light modulator, may be configured for one or more of the following three functions.
1. Removal of contaminants, e.g., dirt, grime, moisture, from the outward surfaces of the light modulator, e.g., a surface of the first and/or second substrate facing away from the optical layer.
2. Improved dispersal of particles during optical transitions, e.g., during a transition decreasing transparency, or increasing reflection, depending on the particle type, e.g., during horizontal drive.
3. Releasing particles that have become stuck in the optical layer. For example, particles may permanently, or semi-permanently, become stuck, or attached in the optical layer. For example, a particle may attach to a substrate, or become stuck near an electrode or the like.

For each of the functions a different frequency, and amplitude may be used, or even a different vibration source. Each of the functions may use a different frequency and amplitude program.

Cleaning the light modulator may be according to a schedule, e.g., once a week, or once a day. In an embodiment, the light modulator comprises a sensor configured to detect accumulation of contaminants on the first and/or second substrate, wherein the vibration source is activated in response to the detection. Sensor based cleaning may be in addition to scheduled cleaning. For example, functions 1 and 3 may be performed on a schedule and/or in dependence on sensor input, while function 2 may be performed during horizontal drive.

For example, ultrasonic cleaning may be used, e.g., using a frequency in the range from 20kHz to 100 kHz, preferably in the range 40kHz to 60 kHz. In some embodiments, a higher frequency may be used, say up to 400 kHz, or even up to 100 Mhz. The frequency and amplitude to use depends on the material and thickness of the substrate. A skilled person may empirically determine which frequency and amplitude work best for a given embodiment. For instance, in one embodiment, a higher frequency may be more effective for the removal of moisture from the substrate than for cleaning dirt and grime. Specifically, a high frequency, in the range of 60-100 kHz, may be used for moisture removal, while a mid-range frequency, say 40-60 kHz, may be employed for general cleaning. It is also possible to use even lower frequencies, in the range of 20-40 kHz, for heavy contaminants. Vigorous agitation may prove useful for removing such heavy contaminants as thicker layers of dirt and grime. For example, the device may be configured for regular cleaning using the high frequency, e.g., daily, e.g., as indicated by a sensor. For example, the device may be configured for less regular cleaning using the mid-range frequency, e.g., weekly, e.g., as indicated by a sensor. The lower frequency may be used on demand, e.g., as part of a maintenance program.

The exact frequency and amplitude depend on the design of the light modulator and the kind of contaminant to dislodge and may be empirically established. Higher or lower frequencies than indicated are not excluded.

In an embodiment, the light modulator the range, 15 Hz to 25 kHz, preferably 20 hz-20kHz, is excluded from use, at least from regular use. This has the advantage of avoiding audible noise. The light modulator may be configured to avoid a further range, e.g., to accommodate house pets. For example, the light modulator may be configured to avoid frequencies up to 50 kHz, e.g., in case of rabbits or hamsters. For example, the light modulator may be configured to avoid frequencies up to 65 kHz, e.g., in case of dogs. For example, the light modulator may be configured to avoid frequencies up to 80 kHz, e.g., in case of cats.

In an embodiment, the light modulator, e.g., windows, may be used as audible sirens, e.g., in conjunction with a burglar alarm, e.g., in case of intruders. For example, the light modulator may have an input for starting an alarm, which may be operated by a burglar alarm or the like.

In an embodiment, vibrating glazing is used as part of the thermal management system of the building. The vibrating glazing may cause an air flow which contributes to cooling or heating. In an embodiment of a vibrating light modulator, e.g., vibrating glazing, the light modulator comprises an input for receiving a signal that instructs it to vibrate. For example, the signal may be received from a control panel, or a thermal management system. Upon receiving this signal, the glazing oscillates within a predetermined frequency. For example, the frequency may be in a range of approximately 5 to 200 Hz. The vibrations generate an air flow across the surface of the glazing, contributing to convective heat transfer. This mechanism aids in the cooling or heating of the building's interior by facilitating the distribution of cold or warm air.

Control signals and/or power signals may be supplied to a vibration source through an electrode dedicated to providing such control and/or power. However, the electrode system for modulating the optical properties of the light modulator may also be used for this. **Figure 6f** schematically shows an example of an embodiment of a substrate for use in an embodiment of a light modulator. Figure 6f show an electrode 512 of the electrode system, e.g., a main line of a digitated electrode, and a vibration source 537. Vibration source 537 may be according to an embodiment described herein, e.g., a piezoelectric vibration source. Vibration source 537 is connected to electrode 512 through a connection 551. The electrode system, e.g., electrode 512, is configured to receive an electric signal to cause the modulation of the electric field, but also a vibration signal for vibration source 537. Connection 551 may be configured to separate the vibration signal from the field modulation signal. For example, a low frequency part of the electric signal may cause the field modulation and particle movement, while a high frequency part of the electric signal causes the mechanical wave generation in the vibration source. For example, connection 551 may comprise a high pass filter. Connection 551 may perform further signal processing as desired. Note that high frequency signals on the electrode system will have little effect on the particles in the optical layer. Integrating the high frequency signal of the vibration within the electrical signals of light modulator modulation, allows one to reuse the electrode patterned for the light modulator.

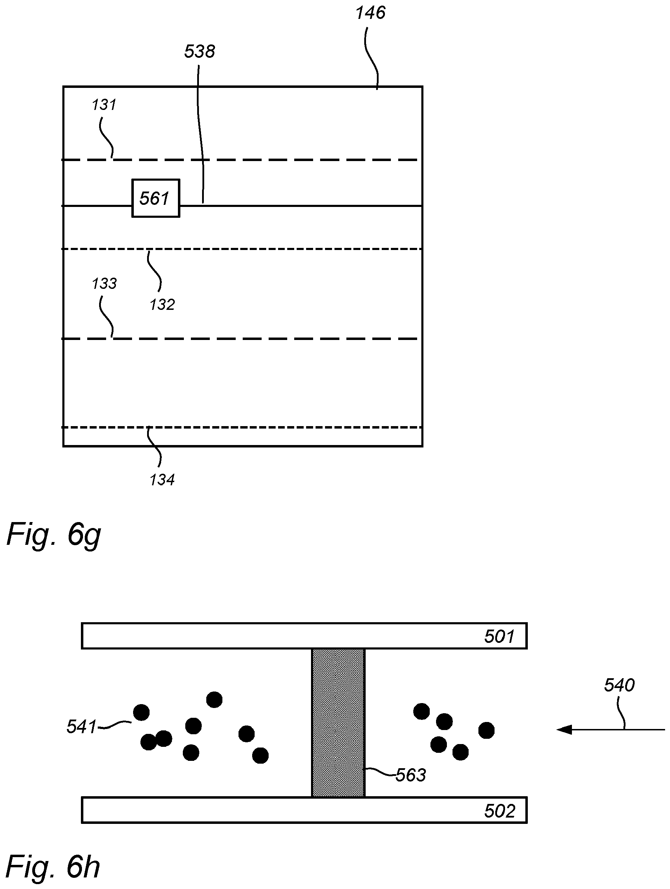

**Figure 6g** schematically shows an example of an embodiment of a substrate for use in an embodiment of a light modulator. Shown is a building block 146, like building block 145, which may be repeated across the substrate. Building block 146 show electrode lines 131-134 that will form the electrode system once block 146 is repeated. Block 146 also included vibration source 561, and a signal line 538. In this case, a new electrode 538 is created to control vibration source 561.

Multiple vibration sources may be spread across at least one of the first and second substrate. An advantageous way to do this is to integrate them in spacers. **Figure 6h** schematically shows a side-view of an example of an embodiment of a light modulator. Figure 6h shows a spacer 563 inserted between substrates 501 and 502. The optical layer 540 between substrates 501 and 502 comprises particles 541. Particle 541 disperse around the spacer. For example, the spacers may be spread around the substrate as schematically illustrated in figure 1g. Spacers maintain a distance between the first substrate and the second substrate, known as a cell gap.

Spacer 563 comprises a vibration source arranged to create a cell gap vibration. For example, piezoelectric materials may be used as spacers between two glass panes and to induce vibrations in the panes using these materials.

The choice of piezoelectric material may be varied, with options such as quartz, Rochelle salt, and specific ceramics. Piezoceramic materials, like PZT - Lead Zirconate Titanate, may be preferred due to their pronounced piezoelectric response and the convenience of manufacturing into the desired shapes.

The design of the spacer may be tailored to fit comfortably between the two glass panes, ensuring consistent spacing. This design might also incorporate the necessary wiring and connections to provide a voltage to the piezoelectric material.

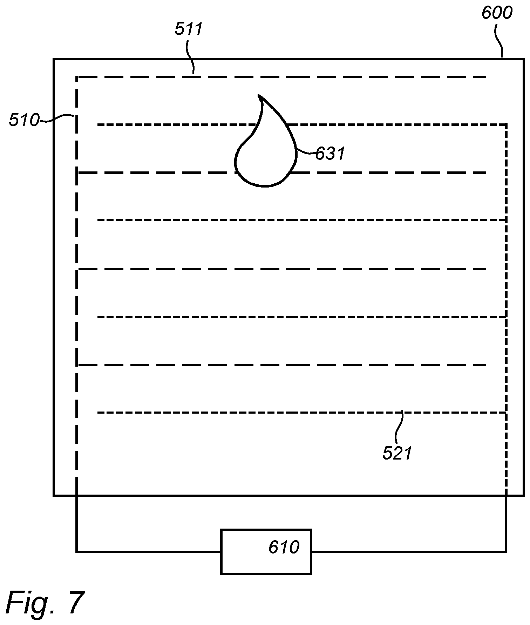

For example, **Figure 7** schematically shows an example of an embodiment of a light modulator. Shown is a substrate 600. Two interdigitated electrodes are applied on one of the first and/or second substrate on the surface facing away from the optical layer. That is, these electrodes are different from the electrode system for modulating the optical layer. However, it is convenient that, in an embodiment, the lay-out of the electrode systems could be the same. For example, both sides of the substrate may have two interdigitated electrodes applied to it. This allows production to apply the electrodes using the same machinery.

The two interdigitated electrodes are configured to detect a water drop by measuring the conductivity between the two interdigitated electrodes. The light modulator is configured to deliver the mechanical wave when detected water drops exceed a threshold.

For example, vibration can be used to help to clean the outside window when raining. By using an external electrode similar to the light modulator patterned electrode, a rain detector can be created measuring the conductivity between the electrodes. Very small droplets can be detected.

Extra support can be provided for cleaning by integrating a low energy surface coating/structure. On the outside, preference is for a nanostructured surface where the air entrapment will be the best solution to support water falling and comply with window cleaning requirements.

Using the effect to clean the light modulator internal surface is also beneficial to avoid pigment aggregation on the surface and loss of performances.

In this case the use of coating is preferred as no air should be entrapped. Low energy coatings like fluorinated or self-assembly monolayers are preferred.

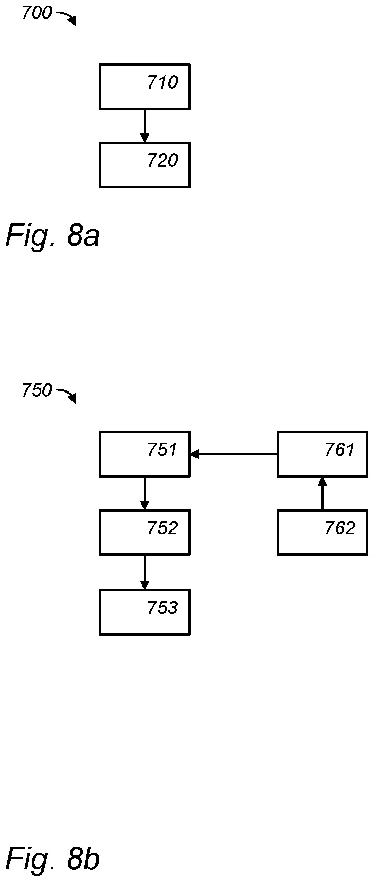

**Figure 8a** schematically shows an example of a controlling method 700 for a light modulator. Method 700 is for operating a light modulator. The light modulator comprises
- a first substrate, a second substrate arranged opposite the first substrate, an electrode system extending across at least the first substrate on a side facing the second substrate,
- an optical layer extending between the first and second substrate,
- a fluid that comprises particles,
- a vibration source configured to deliver a mechanical wave to at least part of the first and/or second substrate. Method 700 comprises
- applying (710) an electric potential to the electrode system causing modulation of an electric field in the optical layer providing electrophoretic and/or dielectrophoretic movement of the particles in the optical layer causing modulation of light passing through the substrates, and
- delivering (720) a mechanical wave to at least part of the first and/or second substrate.

**Figure 8b** schematically shows an example of a controlling method 750 for a light modulator. Shown in figure 8b is
- a sensor 762 configured to detect contaminants, e.g., a moisture detector as in figure 7,
- a sensor control unit 761 configured to integrate the sensor data into a sensor signal
- a control unit 751 configured to receive the sensor signal, and to generate a vibration signal in response,
- an amplifier unit 752 configured to amplify the vibration signal,
- a vibration source, e.g., an actuator and/or piezoelectric material, configured to receive the amplified vibration signal and to generate a mechanical wave in response.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 700 and/or 750. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

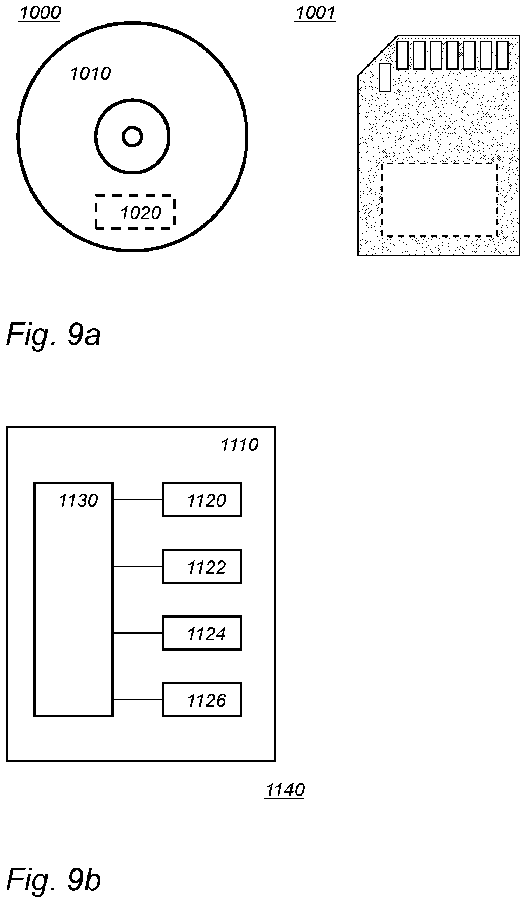

**Figure 9a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method for a light modulator, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method for a light modulator.

**Figure 9b** shows in a schematic representation of a processor system 1140 according to an embodiment of a light modulator system. The processor system comprises one or more integrated circuits 1110. The architecture of the one or more integrated circuits 1110 is schematically shown in Figure 9b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., a light modulator system, may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A light modulator comprising
- a first substrate, a second substrate arranged opposite the first substrate, an electrode system extending across at least the first substrate on a side facing the second substrate,
- an optical layer extending between the first and second substrate, the optical layer comprising a fluid that comprises particles, wherein the light modulator is configured to apply an electric potential to the electrode system causing modulation of an electric field in the optical layer providing electrophoretic and/or dielectrophoretic movement of the particles in the optical layer causing modulation of light passing through the substrates, and
- a vibration source configured to deliver a mechanical wave to at least part of the first and/or second substrate and/or to the fluid in the optical layer.

2. A light modulator as in Claim 1, wherein the mechanical wave is delivered at least to an area in the center of the surface of at least one of the first and second substrate, preferably to the entire surface of at least one of the first and second substrate.

3. A light modulator as in any of the preceding claims, wherein
- multiple vibration sources are spread across at least one of the first and second substrate, and/or
- the vibration source is applied to a side of the first and/or second substrate facing towards the optical layer, or to a side facing away from the optical layer.

4. A light modulator as in any of the preceding claims, wherein the vibration source comprises a piezoelectric material arranged to generate the mechanical wave.

5. A light modulator as in Claim 4, wherein
- the piezoelectric material is transparent, and/or
- the piezoelectric material is patterned across the surface of the first and/or second substrate, e.g., in piezoelectric lines, and/or
- the piezoelectric material is patterned and configured to provide a localized mechanical wave.

6. A light modulator as in any of the preceding claims, wherein the electrode system comprises a digitated electrode extending across at least the first substrate, the piezoelectric material being applied across the first substrate in electrical connection with the digitated electrode to generate the mechanical wave in response to an electric signal on the digitated electrode.

7. A light modulator as in Claim 6, wherein the vibration source is configured to deliver
- a shear wave to at least part of the first and/or second substrate, and/or
- an acoustic wave to the fluid.

8. A light modulator as in any of the preceding claims, wherein one or more spacers are arranged between the first substrate and the second substrate maintaining a cell gap between the first substrate and the second substrate, the one or more spacers comprising the vibration source arranged to create a cell gap vibration.

9. A light modulator as in any of the preceding claims, wherein the electrode system is configured to receive an electric signal causing the modulation of the electric field, the electrode system being connected to the vibration source, a high frequency part of the electric signal causing the mechanical wave generation in the vibration source.

10. A light modulator as in any of the preceding claims, comprising a sensor configured to detect accumulation of contaminants on the first and/or second substrate, wherein the vibration source is activated in response to the detection.

11. A light modulator as in any of the preceding claims, wherein two interdigitated electrodes are applied on one of the first and/or second substrate on the surface facing away from the optical layer, the two interdigitated electrodes being configured to detect a water drop by measuring the conductivity between the two interdigitated electrodes, wherein the light modulator is configured to deliver the mechanical wave when detected water drops exceed a threshold.

12. A light modulator as in any of the preceding claims, comprising a signal input configured to receive an electric vibration signal indicating the mechanical wave, the vibration source being configured to deliver the mechanical wave as indicated in response to receiving the electric vibration signal at the signal input.

13. A light modulator as in any of the preceding claims, wherein the vibration source is arranged to dislodge particles and/or residue from the at least part of the first and/or second surface.

14. A light modulator as in any of the preceding claims, comprising a controller configured to control a frequency and/or amplitude of the mechanical wave.

15. A light modulator as in Claim 14, wherein the controller is configured to select a frequency and/or amplitude of the mechanical wave from multiple frequencies and/or amplitudes, and to cause the vibration source to deliver the mechanical wave at the selected frequency and/or amplitude.

16. A light modulator as in any of claims 14-15, wherein the controller is configured to cycle through multiple frequencies and/or amplitudes for the mechanical wave, wherein different frequencies and/or amplitudes are utilized for specific durations.

17. A light modulator as in any of Claims 14-16, wherein the controller is configured to track the electrophoretic and/or dielectrophoretic movement of the particles in the optical layer, and to deliver the mechanical wave in dependence on the tracked movement.

18. A light modulator as in any of Claims 14-17, wherein the controller is configured to transition the optical layer from a more transparent state to a less transparent state, the mechanical wave being delivered during the transition to assist dispersion of the particles.

19. A light modulator as in any of the preceding claims, wherein mechanical waves are transmitted by the first and/or second substrate.

20. Dynamic glazing comprising a light modulator as in any of the preceding claims.

21. A method (700) for operating a light modulator, the light modulator comprising
- a first substrate, a second substrate arranged opposite the first substrate, an electrode system extending across at least the first substrate on a side facing the second substrate,
- an optical layer extending between the first and second substrate,
- a fluid that comprises particles,
- a vibration source configured to deliver a mechanical wave to at least part of the first and/or second substrate and/or to the fluid in the optical layer, the method comprising
- applying (710) an electric potential to the electrode system causing modulation of an electric field in the optical layer providing electrophoretic and/or dielectrophoretic movement of the particles in the optical layer causing modulation of light passing through the substrates, and
- delivering (720) a mechanical wave to at least part of the first and/or second substrate.

22. A transitory or non-transitory computer readable medium (1000) comprising data (1020) representing instructions, which when executed by a processor system, cause the processor system to perform the method according to claim 21.
